# EUROPEAN PATENT APPLICATION

(11) **EP 4 783 483 A1**
(43) Date of publication of application: **29.07.2026**
(21) Application number: 24876260.1
(22) Date of filing: 16.08.2024
(51) Int. Cl.: H04B 7/06

(54) **COMMUNICATION METHOD, COMMUNICATION APPARATUS, AND STORAGE MEDIUM**

(30) Priority: 12.10.2023 CN 202311322806
(71) Applicant: HUAWEI TECHNOLOGIES CO., LTD., Shenzhen 518129 (CN)
(72) Inventor: LI, Xi, Shenzhen, Guangdong 518129 (CN); CAI, Shijie, Shenzhen, Guangdong 518129 (CN); GAO, Xiang, Shenzhen, Guangdong 518129 (CN); LIU, Kunpeng, Shenzhen, Guangdong 518129 (CN)
(74) Representative: Grünecker Patent- und Rechtsanwälte PartG mbB
(86) International application number: PCT/CN2024/112765
(87) International publication number: WO 2025/077440

(57) **Abstract**

This application discloses a communication method, a communication apparatus, and a storage medium, and relates to the communication field. The method includes: configuring, for a terminal device, a sounding reference signal (Sounding Reference Signal, SRS) resource whose port quantity corresponds to an antenna sending capability of the terminal device, where the antenna sending capability of the terminal device indicates a maximum quantity of antennas capable of being simultaneously used by the terminal device to send a signal; receiving SRSs from the terminal device, where the terminal device includes at least two sub-receivers, and the SRSs are sent by the terminal device separately through antennas of different sub-receivers based on the SRS resource; and determining, based on the port quantity of the SRS resource and an antenna quantity of each sub-receiver of the terminal device, a sub-receiver corresponding to a port corresponding to the SRS. According to the method, a network device can determine the sub-receiver corresponding to the port corresponding to the sounding reference signal received by the network device, and therefore the network device can perform a corresponding precoding design (for example, EZF precoding), to ensure a communication capability of each split sub-receiver.

## Description

This application claims priority to Chinese Patent Application No. 202311322806.8, filed with the China National Intellectual Property Administration on October 12, 2023 and entitled "COMMUNICATION METHOD, COMMUNICATION APPARATUS, AND STORAGE MEDIUM", which is incorporated herein by reference in its entirety.

### TECHNICAL FIELD

Embodiments of this application relate to the communication field, and in particular, to a communication method, a communication apparatus, and a storage medium.

### BACKGROUND

With development of 5G, market requirements are rising. One of current requirements is to raise a downlink peak transmission rate to 1.6 Gbps. To meet this, for example, 6R receivers, which are more advanced than currently used 4R receivers, need to be used in downlink transmission to effectively improve spectral efficiency. The 6R receiver refers to a receiver device equipped with six receive antennas. Compared with a 4R receiver, the 6R receiver can significantly increase a downlink throughput for single users in cells and also extend coverage for cell edge users.

However, for high-rank transmission (more than 4 transport streams), the conventional 6R receiver solution exhibits high implementation difficulty and computational burden. A feasible solution is to split the 6R receiver into two sub-receivers including a plurality of receive antennas, and each sub-receiver independently receives and processes signals. This can effectively resolve the foregoing problems of high implementation difficulty and computational burden.

However, when terminals adopt such a sub-receiver architecture, a base station cannot learn of a correspondence between sub-receivers and a plurality of channels (namely, antenna ports respectively corresponding to a plurality of antennas) obtained through a single sounding reference signal-based antenna measurement. Consequently, the base station is unable to perform a corresponding precoding design (for example, EZF precoding), and thus a communication capability of a split 6R receiver cannot be ensured.

### SUMMARY

Embodiments of this application provide a communication method, a communication apparatus, and a storage medium, so that a network device can determine a sub-receiver corresponding to a port corresponding to a sounding reference signal received by the network device, and therefore the network device can perform a corresponding precoding design (for example, EZF precoding), to ensure a communication capability of each split sub-receiver.

According to a first aspect, an embodiment of this application provides a communication method. The method includes: configuring, for a terminal device, a sounding reference signal (Sounding Reference Signal, SRS) resource whose port quantity corresponds to an antenna sending capability of the terminal device, where the antenna sending capability of the terminal device indicates a maximum quantity of antennas capable of being simultaneously used by the terminal device to send a signal; receiving SRSs from the terminal device, where the terminal device includes at least two sub-receivers, and the SRSs are sent by the terminal device separately through antennas of different sub-receivers based on the SRS resource; and determining, based on the port quantity of the SRS resource configured for the terminal device and an antenna quantity of each sub-receiver of the terminal device, a sub-receiver corresponding to a port corresponding to the SRS.

According to the method, the terminal device may sequentially send the SRS in one or more transmissions through antennas of different sub-receivers based on the port quantity of the SRS resource configured by the network device (for example, a base station) for the terminal device and the antenna quantity of each sub-receiver. Therefore, after receiving the SRS, the network device can determine, based on the port quantity of the SRS resource configured by the network device for the terminal device and the antenna quantity of each sub-receiver, sub-receivers corresponding to ports used for receiving different SRSs. For example, when the antenna sending capability of the terminal device is 2, and the antenna quantity corresponding to each sub-receivers is 2, the network device may configure, for the terminal device, an SRS resource whose port quantity is 2, and the terminal device may sequentially send the SRS through two antennas of each sub-receiver based on a sub-receiver sequence. Therefore, when receiving the SRS in a 1^{st} reception, the network device may determine that two ports corresponding to the SRS correspond to the first sub-receiver in the sub-receiver sequence; when the SRS is received in a 2^{nd} reception, determine that two ports corresponding to the SRS correspond to the second sub-receiver in the sub-receiver sequence; and the like. Therefore, the network device can determine, according to the method, the sub-receiver corresponding to the port (or a channel) corresponding to the SRS received by the network device, so that the network device can perform a corresponding precoding design (for example, EZF precoding), to ensure a communication capability of each split sub-receiver.

In a possible design, the terminal device includes a first sub-receiver and a second sub-receiver, the first sub-receiver includes N antennas, the second sub-receiver includes M antennas, and the port quantity of the SRS resource configured for the terminal device is K, where N, M, and K are positive integers; and the determining, based on the port quantity of the SRS resource configured for the terminal device and the antenna quantity of each sub-receiver of the terminal device, the sub-receiver corresponding to the port corresponding to the SRS includes: when K is less than M+N, determining that ports corresponding to SRSs received in first a receptions correspond to the first sub-receiver, and ports corresponding to SRSs received in later b receptions correspond to the second sub-receiver, where N is S times K, M is L times K, a=S when S is an integer, or a is a value obtained by rounding up S when S is a non-integer, and b=L when L is an integer, or b is a value obtained by rounding up L when L is a non-integer.

Based on this possible design, the network device can configure the corresponding SRS resource for the terminal device based on the antenna sending capability of the terminal device and the antenna quantity of each sub-receiver, so that the terminal device sequentially sends the SRS through antennas of different sub-receivers based on a specific quantity of times and sequence. Therefore, the network device can determine, based on the port quantity of the SRS resource configured for the terminal device and the antenna quantity of each sub-receiver, the sub-receiver corresponding to the port corresponding to the corresponding SRS according to a policy matching a manner of sending the SRS by the terminal device.

In a possible design, the determining, based on the port quantity of the SRS resource configured for the terminal device and the antenna quantity of each sub-receiver of the terminal device, the sub-receiver corresponding to the port corresponding to the SRS further includes: when K=M+N, based on a port index, a comb, or a cyclic shift corresponding to the SRS, and based on a preset correspondence between a sub-receiver and the following: a port index, a comb, or a cyclic shift, determining the sub-receiver corresponding to the port corresponding to the SRS.

Based on this possible design, when the antenna sending capability of the terminal device is the same as a total antenna quantity of the sub-receivers, antenna switching and measurement can be performed on all antennas through only one SRS transmission, so that the terminal can determine a sub-receiver corresponding to each port.

In a possible design, the determining, based on the port quantity of the SRS resource configured for the terminal device and the antenna quantity of each sub-receiver of the terminal device, the sub-receiver corresponding to the port corresponding to the SRS further includes: when K=M+N, and K ports of the SRS resource are used for sending on X adjacent orthogonal frequency division multiplexing OFDM symbols, determining, based on a preset correspondence between an OFDM symbol and a sub-receiver, a sub-receiver corresponding to a port corresponding to each OFDM symbol of the SRS.

Based on this possible design, when the antenna sending capability of the terminal device is the same as a total antenna quantity of the sub-receivers, and the terminal sends the SRS through two or more OFDM symbols, the correspondence between the OFDM symbol and the sub-receiver can be used to distinguish between sub-receivers corresponding to ports corresponding to different OFDM symbols, thereby improving efficiency of determining a sub-receiver corresponding to each sub-receiver port.

In a possible design, the determining, based on the port quantity of the SRS resource configured for the terminal device and the antenna quantity of each sub-receiver of the terminal device, the sub-receiver corresponding to the port corresponding to the SRS further includes: when M=N=K+1, determining that a port corresponding to an SRS received in a 1^{st} reception corresponds to the first sub-receiver, and a port corresponding to an SRS received in a 3^{rd} reception corresponds to the second sub-receiver, and determining, based on the preset correspondence between the port index or the cyclic shift and the sub-receiver, and a port index or a cyclic shift corresponding to an SRS received in a 2^{nd} reception, a sub-receiver corresponding to a port corresponding to the SRS received in the 2^{nd} reception.

Based on this possible design, when the port quantity of the SRS resource is less than a total antenna quantity of the terminal device, and an antenna quantity of the first sub-receiver is equal to an antenna quantity of the second sub-receiver and is 1 greater than the port quantity of the SRS resource, one SRS transmission can be reduced, thereby improving antenna switching and measurement efficiency.

In a possible design, the terminal device includes a first sub-receiver and a second sub-receiver, the first sub-receiver includes N antennas, the second sub-receiver includes M antennas, and the port quantity of the SRS resource configured for the terminal device is K, where N, M, and K are positive integers, N is S times K, and M is L times K; and the determining, based on the port quantity of the SRS resource configured for the terminal device and the antenna quantity of each sub-receiver of the terminal device, the sub-receiver corresponding to the port corresponding to the SRS includes: when K is less than M+N, both S and L are integers, and S=L+1, determining that a port corresponding to an SRS corresponding to an odd-numbered one among a receptions in which SRSs are received corresponds to the first sub-receiver, and a port corresponding to an SRS corresponding to an even-numbered one among the a receptions corresponds to the second sub-receiver, where a=S+L.

Based on this possible design, the first sub-receiver and the second sub-receiver can alternately send the SRS, to avoid waiting of switching time for performing transmit antenna switching on a same sub-receiver, thereby improving antenna switching and measurement efficiency.

In a possible design, the terminal device includes a first sub-receiver and a second sub-receiver, the first sub-receiver includes N antennas, the second sub-receiver includes M antennas, the SRS resource configured for the terminal device includes a first SRS resource and a second SRS resource, a port quantity of the first SRS resource is K, and a port quantity of the second SRS resource is H, where N, M, K, and H are positive integers, and values of K and H are different; and the determining, based on the port quantity of the SRS resource configured for the terminal device and the antenna quantity of each sub-receiver of the terminal device, the sub-receiver corresponding to the port corresponding to the SRS includes: when K=N and H=M, determining that K ports used for receiving the SRS in the 1^{st} reception correspond to the first sub-receiver, and H ports used for receiving the SRS in the 2^{nd} reception correspond to the second sub-receiver.

Based on this possible design, when the antenna sending capability of the terminal device matches the antenna quantity of each sub-receiver, antenna switching and measurement can be quickly completed through two SRS transmissions, and the network device can conveniently determine the sub-receiver corresponding to each port.

In a possible design, the determining, based on the port quantity of the SRS resource configured for the terminal device and the antenna quantity of each sub-receiver of the terminal device, the sub-receiver corresponding to the port corresponding to the SRS further includes: when K+H=N=M, determining that K ports used for receiving the SRS in the 1^{st} reception and H ports used for receiving the SRS in the 2^{nd} reception correspond to the first sub-receiver, and determining that K ports used for receiving an SRS in a 3^{rd} reception and H ports used for receiving an SRS in a 4^{th} reception correspond to the second sub-receiver.

Based on this possible design, antenna switching and measurement can be conveniently and quickly performed on different sub-receivers by using two antenna sending capabilities of the terminal device, and the network device can conveniently determine the sub-receiver corresponding to each port.

In a possible design, the determining, based on the port quantity of the SRS resource configured for the terminal device and the antenna quantity of each sub-receiver of the terminal device, the sub-receiver corresponding to the port corresponding to the SRS further includes: when K-1=N=M=H+1, determining, based on a preset correspondence between a port index or a cyclic shift and a sub-receiver, and a port index or a cyclic shift corresponding to the received SRS, that K-1 ports in K ports used for receiving the SRS correspond to the first sub-receiver, and determining that H ports in H ports used for receiving the SRS and one port that is in the K ports used for receiving the SRS and that does not correspond to the first sub-receiver correspond to the second sub-receiver.

Based on this possible design, antenna switching and measurement can be conveniently and quickly performed on different sub-receivers by using two antenna sending capabilities of the terminal device, and the network device can conveniently determine the sub-receiver corresponding to each port.

In a possible design, the determining, based on the port quantity of the SRS resource configured for the terminal device and the antenna quantity of each sub-receiver of the terminal device, the sub-receiver corresponding to the port corresponding to the SRS further includes: when K-1=N=M=H+1, and a value of N is an odd number, determining, based on a preset correspondence between a port index or a cyclic shift and a sub-receiver, that K/2 ports in K ports used for receiving the SRS correspond to the first sub-receiver and other K/2 ports correspond to the second sub-receiver, and determining that H/2 ports in H ports used for receiving the SRS correspond to the first sub-receiver and other H/2 ports correspond to the second sub-receiver.

Based on this possible design, antenna switching and measurement can be conveniently and quickly performed on different sub-receivers by using two antenna sending capabilities of the terminal device, and the network device can conveniently determine the sub-receiver corresponding to each port.

In a possible design, the at least two sub-receivers each have a limited sending capability, a sending capability of a sub-receiver indicates a maximum quantity of antennas capable of being simultaneously used by the sub-receiver to send a signal, the terminal device includes a first sub-receiver and a second sub-receiver, the first sub-receiver includes N antennas, the second sub-receiver includes M antennas, a port quantity of an SRS resource applied to the first sub-receiver is A, and a port quantity of an SRS resource applied to the second sub-receiver is B, where N, M, A, and B are positive integers, N=M, A=B, N is S times A, and S is an integer; and the determining, based on the port quantity of the SRS resource configured for the terminal device and the antenna quantity of each sub-receiver of the terminal device, the sub-receiver corresponding to the port corresponding to the SRS includes: determining, based on a preset correspondence between a port index or a cyclic shift and a sub-receiver, A ports corresponding to the first sub-receiver and B ports corresponding to the second sub-receiver in ports corresponding to an SRS received in each reception.

Based on this possible design, antenna switching and measurement can be conveniently performed when two sending-capability-limited sub-receivers that have a same sending capability are used as sub-receivers, and the network device can quickly determine the sub-receiver corresponding to each port.

In a possible design, the at least two sub-receivers each have a limited sending capability, a sending capability of a sub-receiver indicates a maximum quantity of antennas capable of being simultaneously used by the sub-receiver to send a signal, the terminal device includes a first sub-receiver and a second sub-receiver, the first sub-receiver includes N antennas, the second sub-receiver includes M antennas, the SRS resource configured for the terminal device includes a first SRS resource and a second SRS resource, a port quantity of the first SRS resource is 2A, a port quantity of the second SRS resource is 2B, the first sub-receiver and the second sub-receiver each apply A ports of the first SRS resource, and the first sub-receiver and the second sub-receiver each apply B ports of the second SRS resource, where N, M, A, and B are positive integers, and N=M=A+B; and the determining, based on the port quantity of the SRS resource configured for the terminal device and the antenna quantity of each sub-receiver of the terminal device, the sub-receiver corresponding to the port corresponding to the SRS includes: separately determining, based on a preset correspondence between a port index or a cyclic shift and a sub-receiver, A ports corresponding to the first sub-receiver and other A ports corresponding to the second sub-receiver in 2A ports used for receiving an SRS in a 1^{st} reception, and B ports corresponding to the first sub-receiver and other B ports corresponding to the second sub-receiver in 2B ports used for receiving an SRS in a 2^{nd} reception.

Based on this possible design, antenna switching and measurement can be conveniently performed when two sending-capability-limited sub-receivers that have a same sending capability and each include two sending capabilities are used as sub-receivers, and the network device can quickly determine the sub-receiver corresponding to each port.

In a possible design, the at least two sub-receivers each have a limited sending capability, a sending capability of a sub-receiver indicates a maximum quantity of antennas capable of being simultaneously used by the sub-receiver to send a signal, the terminal device includes a first sub-receiver and a second sub-receiver, the first sub-receiver includes N antennas, the second sub-receiver includes M antennas, the port quantity of the SRS resource configured for the terminal device is 2A, and the first sub-receiver and the second sub-receiver each apply A ports of the SRS resource, where N, M, and A are positive integers, N is greater than M, N is S times A, M is L times A, and both S and L are integers; and the determining, based on the port quantity of the SRS resource configured for the terminal device and the antenna quantity of each sub-receiver of the terminal device, the sub-receiver corresponding to the port corresponding to the SRS includes: separately determining, based on a preset correspondence between a port index or a cyclic shift and a sub-receiver, A ports corresponding to the first sub-receiver and other A ports corresponding to the second sub-receiver in 2A ports used for receiving an SRS in each of first L receptions, where A ports used for receiving an SRS in each of later S-L receptions correspond to the first sub-receiver.

Based on this possible design, antenna switching and measurement can be conveniently performed when two sending-capability-limited sub-receivers that have a same sending capability and for which an antenna quantity is an integer multiple of the sending capability are used as sub-receivers, and the network device can quickly determine the sub-receiver corresponding to each port.

In a possible design, the antenna included in the first sub-receiver and the antenna included in the second sub-receiver are separately predetermined based on antenna polarization and/or cabling.

Based on this possible design, an antenna can be disposed for each sub-receiver in advance based on a plan, cabling, or the like, to reduce interference between antennas.

In a possible design, the antenna included in the first sub-receiver and the antenna included in the second sub-receiver are separately determined by the terminal device based on a channel state information reference signal, or are separately determined by the network device based on the SRS.

Based on the possible design, antennas of the sub-receivers may be flexibly disposed based on a correlation between the antennas, to reduce interference between the antennas of the sub-receivers and improve downlink transmission performance.

In a possible design, an antenna set included in the sub-receiver corresponds to one codeword.

Based on this possible design, signal receiving performance of each sub-receiver can be improved, thereby improving performance of an entire receiver system.

In a possible design, an antenna set included in the sub-receiver corresponds to one code division multiplexing group.

Based on this possible design, each sub-receiver corresponds to a different code division multiplexing group, so that interference between the sub-receivers can be reduced, thereby improving performance of an entire receiver system.

According to a second aspect, an embodiment of this application provides a communication apparatus. The apparatus has a function of implementing the method according to the first aspect. The function may be implemented by hardware, or may be implemented by hardware executing corresponding software. The hardware or the software includes one or more units or modules corresponding to the function of the method according to the first aspect, for example, a sending module, a receiving module, and a processing module.

The sending module is configured to configure, for a terminal device, an SRS resource whose port quantity corresponds to an antenna sending capability of the terminal device, where the antenna sending capability of the terminal device indicates a maximum quantity of antennas capable of being simultaneously used by the terminal device to send a signal.

The receiving module is configured to receive SRSs from the terminal device, where the terminal device includes at least two sub-receivers, and the SRSs are sent by the terminal device separately through antennas of different sub-receivers based on the SRS resource.

The processing module is configured to determine, based on the port quantity of the SRS resource configured for the terminal device and an antenna quantity of each sub-receiver of the terminal device, a sub-receiver corresponding to a port corresponding to the SRS.

In a possible design, the terminal device includes a first sub-receiver and a second sub-receiver, the first sub-receiver includes N antennas, the second sub-receiver includes M antennas, and the port quantity of the SRS resource configured for the terminal device is K, where N, M, and K are positive integers; and the processing module is specifically configured to: when K is less than M+N, determine that ports corresponding to SRSs received in first a receptions correspond to the first sub-receiver, and ports corresponding to SRSs received in later b receptions correspond to the second sub-receiver, where N is S times K, M is L times K, a=S when S is an integer, or a is a value obtained by rounding up S when S is a non-integer, and b=L when L is an integer, or b is a value obtained by rounding up L when L is a non-integer.

In a possible design, the processing module is specifically configured to: when K=M+N, based on a port index, a comb, or a cyclic shift corresponding to the SRS, and based on a preset correspondence between a sub-receiver and the following: a port index, a comb, or a cyclic shift, determine the sub-receiver corresponding to the port corresponding to the SRS.

In a possible design, the processing module is specifically configured to: when K=M+N, and K ports of the SRS resource are used for sending on X adjacent orthogonal frequency division multiplexing OFDM symbols, determine, based on a preset correspondence between an OFDM symbol and a sub-receiver, a sub-receiver corresponding to a port corresponding to each OFDM symbol of the SRS.

In a possible design, the processing module is specifically configured to: when M=N=K+1, determine that a port corresponding to an SRS received in a 1^{st} reception corresponds to the first sub-receiver, and a port corresponding to an SRS received in a 3^{rd} reception corresponds to the second sub-receiver, and determine, based on the preset correspondence between the port index or the cyclic shift and the sub-receiver, and a port index or a cyclic shift corresponding to an SRS received in a 2^{nd} reception, a sub-receiver corresponding to a port corresponding to the SRS received in the 2^{nd} reception.

In a possible design, the terminal device includes a first sub-receiver and a second sub-receiver, the first sub-receiver includes N antennas, the second sub-receiver includes M antennas, and the port quantity of the SRS resource configured for the terminal device is K, where N, M, and K are positive integers, N is S times K, and M is L times K; and the processing module is specifically configured to: when K is less than M+N, both S and L are integers, and S=L+1, determine that a port corresponding to an SRS corresponding to an odd-numbered one among a receptions in which SRSs are received corresponds to the first sub-receiver, and a port corresponding to an SRS corresponding to an even-numbered one among the a receptions corresponds to the second sub-receiver, where a=S+L.

In a possible design, the terminal device includes a first sub-receiver and a second sub-receiver, the first sub-receiver includes N antennas, the second sub-receiver includes M antennas, the SRS resource configured for the terminal device includes a first SRS resource and a second SRS resource, a port quantity of the first SRS resource is K, and a port quantity of the second SRS resource is H, where N, M, K, and H are positive integers, and values of K and H are different; and the processing module is specifically configured to: when K=N and H=M, determine that K ports used for receiving the SRS in the 1^{st} reception correspond to the first sub-receiver, and H ports used for receiving the SRS in the 2^{nd} reception correspond to the second sub-receiver.

In a possible design, the processing module is specifically configured to: when K+H=N=M, determine that K ports used for receiving an SRS in a 1^{st} reception and H ports used for receiving an SRS in a 2^{nd} reception correspond to the first sub-receiver, and determine that K ports used for receiving an SRS in a 3^{rd} reception and H ports used for receiving an SRS in a 4^{th} reception correspond to the second sub-receiver.

In a possible design, the processing module is specifically configured to: when K-1=N=M=H+1, determine, based on a preset correspondence between a port index or a cyclic shift and a sub-receiver, and a port index or a cyclic shift corresponding to the received SRS, that K-1 ports in K ports used for receiving the SRS correspond to the first sub-receiver, and determine that H ports in H ports used for receiving the SRS and one port that is in the K ports used for receiving the SRS and that does not correspond to the first sub-receiver correspond to the second sub-receiver.

In a possible design, the processing module is specifically configured to: when K-1=N=M=H+1, and a value of N is an odd number, determine, based on a preset correspondence between a port index or a cyclic shift and a sub-receiver, that K/2 ports in K ports used for receiving the SRS correspond to the first sub-receiver and other K/2 ports correspond to the second sub-receiver, and determine that H/2 ports in H ports used for receiving the SRS correspond to the first sub-receiver and other H/2 ports correspond to the second sub-receiver.

In a possible design, the at least two sub-receivers each have a limited sending capability, a sending capability of a sub-receiver indicates a maximum quantity of antennas capable of being simultaneously used by the sub-receiver to send a signal, the terminal device includes a first sub-receiver and a second sub-receiver, the first sub-receiver includes N antennas, the second sub-receiver includes M antennas, a port quantity of an SRS resource applied to the first sub-receiver is A, and a port quantity of an SRS resource applied to the second sub-receiver is B, where N, M, A, and B are positive integers, N=M, A=B, N is S times A, and S is an integer; and the processing module is specifically configured to: determine, based on a preset correspondence between a port index or a cyclic shift and a sub-receiver, A ports corresponding to the first sub-receiver and B ports corresponding to the second sub-receiver in ports corresponding to an SRS received in each reception.

In a possible design, the at least two sub-receivers each have a limited sending capability, a sending capability of a sub-receiver indicates a maximum quantity of antennas capable of being simultaneously used by the sub-receiver to send a signal, the terminal device includes a first sub-receiver and a second sub-receiver, the first sub-receiver includes N antennas, the second sub-receiver includes M antennas, the SRS resource configured for the terminal device includes a first SRS resource and a second SRS resource, a port quantity of the first SRS resource is 2A, a port quantity of the second SRS resource is 2B, the first sub-receiver and the second sub-receiver each apply A ports of the first SRS resource, and the first sub-receiver and the second sub-receiver each apply B ports of the second SRS resource, where N, M, A, and B are positive integers, and N=M=A+B; and the processing module is specifically configured to: separately determine, based on a preset correspondence between a port index or a cyclic shift and a sub-receiver, A ports corresponding to the first sub-receiver and other A ports corresponding to the second sub-receiver in 2A ports used for receiving an SRS in a 1^{st} reception, and B ports corresponding to the first sub-receiver and other B ports corresponding to the second sub-receiver in 2B ports used for receiving an SRS in a 2^{nd} reception.

In a possible design, the at least two sub-receivers each have a limited sending capability, a sending capability of a sub-receiver indicates a maximum quantity of antennas capable of being simultaneously used by the sub-receiver to send a signal, the terminal device includes a first sub-receiver and a second sub-receiver, the first sub-receiver includes N antennas, the second sub-receiver includes M antennas, the port quantity of the SRS resource configured for the terminal device is 2A, and the first sub-receiver and the second sub-receiver each apply A ports of the SRS resource, where N, M, and A are positive integers, N is greater than M, N is S times A, M is L times A, and both S and L are integers; and the processing module is specifically configured to: separately determine, based on a preset correspondence between a port index or a cyclic shift and a sub-receiver, A ports corresponding to the first sub-receiver and other A ports corresponding to the second sub-receiver in 2A ports used for receiving an SRS in each of first L receptions, where A ports used for receiving an SRS in each of later S-L receptions correspond to the first sub-receiver.

In a possible design, the antenna included in the first sub-receiver and the antenna included in the second sub-receiver are separately predetermined based on antenna polarization and/or cabling.

In a possible design, the antenna included in the first sub-receiver and the antenna included in the second sub-receiver are separately determined by the terminal device based on a channel state information reference signal, or are separately determined by the network device based on the SRS.

In a possible design, an antenna set included in the sub-receiver corresponds to one codeword.

In a possible design, an antenna set included in the sub-receiver corresponds to one code division multiplexing group.

According to a third aspect, an embodiment of this application further provides a communication apparatus, including a memory and a processor. The processor is configured to execute computer instructions stored in the memory, and when the computer instructions are executed, the apparatus is enabled to perform the method according to any one of the first aspect or the possible designs of the first aspect.

According to a fourth aspect, an embodiment of this application further provides a communication apparatus, including a processor and an interface circuit. The processor is configured to communicate with another apparatus through the interface circuit, and perform the method according to any one of the first aspect or the possible designs of the first aspect.

The communication apparatus according to the second aspect to the fourth aspect may be used in a network device.

According to a fifth aspect, an embodiment of this application further provides a computer-readable storage medium. The computer-readable storage medium stores computer instructions. When the computer instructions are run on a network device or a chip built in the network device, the network device is enabled to perform the method according to the first aspect.

According to a sixth aspect, an embodiment of this application further provides a computer program product including instructions. When the computer program product runs on a computer, the computer is enabled to perform the method according to any one of the first aspect or the possible designs of the first aspect.

It may be understood that for beneficial effect that can be achieved in the second aspect to the sixth aspect provided above, refer to beneficial effect in any one of the first aspect and the possible designs of the first aspect. Details are not described herein again.

According to a seventh aspect, an embodiment of this application provides a communication method. The method includes: receiving an SRS resource configured by a network device for the terminal device, where a port quantity of the SRS resource corresponds to an antenna sending capability of the terminal device, the antenna sending capability indicates a maximum quantity of antennas capable of being simultaneously used by the terminal device to send a signal, and the terminal device includes at least two sub-receivers; and sending SRSs to the network device, where the SRSs are sent by the terminal device separately through antennas of different sub-receivers based on the SRS resource configured by the network device for the terminal device and an antenna quantity of each sub-receiver of the terminal device, so that the network device is able to determine, based on the port quantity of the SRS resource configured for the terminal device and the antenna quantity of each sub-receiver of the terminal device, a sub-receiver corresponding to a port corresponding to the SRS.

According to the method, the terminal device may sequentially send the SRS in one or more transmissions through antennas of different sub-receivers based on the port quantity of the SRS resource configured by the network device (for example, a base station) for the terminal device and the antenna quantity of each sub-receiver. Therefore, after receiving the SRS, the network device can determine, based on the port quantity of the SRS resource configured by the network device for the terminal device and the antenna quantity of each sub-receiver, sub-receivers corresponding to ports used for receiving different SRSs. For example, when the antenna sending capability of the terminal device is 2, and the antenna quantity corresponding to each sub-receivers is 2, the network device may configure, for the terminal device, an SRS resource whose port quantity is 2, and the terminal device may sequentially send the SRS through two antennas of each sub-receiver based on a sub-receiver sequence. Therefore, when receiving the SRS in a 1^{st} reception, the network device may determine that two ports corresponding to the SRS correspond to the first sub-receiver in the sub-receiver sequence; when the SRS is received in a 2^{nd} reception, determine that two ports corresponding to the SRS correspond to the second sub-receiver in the sub-receiver sequence; and the like. Therefore, the network device can determine, according to the method, the sub-receiver corresponding to the port (or a channel) corresponding to the SRS received by the network device, so that the network device can perform a corresponding precoding design (for example, EZF precoding), to ensure a communication capability of each split sub-receiver.

In a possible design, the terminal device includes a first sub-receiver and a second sub-receiver, the first sub-receiver includes N antennas, the second sub-receiver includes M antennas, and the port quantity of the SRS resource configured for the terminal device is K, where N, M, and K are positive integers; and when K is less than M+N, the sending the SRSs to the network device includes: sending an SRS to the network device in a transmissions through an antenna of the first sub-receiver, where an SRS sent in each transmission corresponds to a different antenna; and sending an SRS to the network device in b transmissions through an antenna of the second sub-receiver, where an SRS sent in each transmission corresponds to a different antenna, N is S times K, M is L times K, a=S when S is an integer, or a is a value obtained by rounding up S when S is a non-integer, and b=L when L is an integer, or b is a value obtained by rounding up L when L is a non-integer.

Based on this possible design, the network device can configure the corresponding SRS resource for the terminal device based on the antenna sending capability of the terminal device and the antenna quantity of each sub-receiver, so that the terminal device sequentially sends the SRS through antennas of different sub-receivers based on a specific quantity of times and sequence. Therefore, the network device can determine, based on the port quantity of the SRS resource configured for the terminal device and the antenna quantity of each sub-receiver, the sub-receiver corresponding to the port corresponding to the corresponding SRS according to a policy matching a manner of sending the SRS by the terminal device.

In a possible design, when K=M+N, the sending the SRSs to the network device includes: sending the SRSs to the network device through all antennas of the first sub-receiver and the second sub-receiver, where port indexes, combs, or cyclic shifts of channels of the antennas corresponding to the SRSs are different from each other.

Based on this possible design, when the antenna sending capability of the terminal device is the same as a total antenna quantity of the sub-receivers, antenna switching and measurement can be performed on all antennas through only one SRS transmission, so that the terminal can determine a sub-receiver corresponding to each port.

In a possible design, when K=M+N, the sending the SRSs to the network device includes: sending the SRSs to the network device through all antennas of the first sub-receiver and the second sub-receiver, where K ports of the SRS resource are used for sending on X adjacent orthogonal frequency division multiplexing OFDM symbols, different OFDM symbols are sent through corresponding sub-receivers based on a preset correspondence between an OFDM symbol and a sub-receiver, and different OFDM symbols correspond to different ports.

Based on this possible design, when the antenna sending capability of the terminal device is the same as a total antenna quantity of the sub-receivers, and the terminal sends the SRS through two or more OFDM symbols, the correspondence between the OFDM symbol and the sub-receiver can be used to distinguish between sub-receivers corresponding to ports corresponding to different OFDM symbols, thereby improving efficiency of determining a sub-receiver corresponding to each sub-receiver port.

In a possible design, when M=N=K+1, the sending the SRSs to the network device includes: sending an SRS to the network device through K antennas of the first sub-receiver; sending an SRS to the network device through an antenna other than the K antennas of the first sub-receiver and a first antenna of the second sub-receiver; and sending an SRS to the network device through all the antennas except the first antenna of the second sub-receiver, where port indexes or cyclic shifts of channels of the antennas corresponding to the SRSs are different from each other.

Based on this possible design, when the port quantity of the SRS resource is less than a total antenna quantity of the terminal device, and an antenna quantity of the first sub-receiver is equal to an antenna quantity of the second sub-receiver and is 1 greater than the port quantity of the SRS resource, one SRS transmission can be reduced, thereby improving antenna switching and measurement efficiency.

In a possible design, the terminal device includes a first sub-receiver and a second sub-receiver, the first sub-receiver includes N antennas, the second sub-receiver includes M antennas, and the port quantity of the SRS resource configured for the terminal device is K, where N, M, and K are positive integers, N is S times K, and M is L times K; and when K is less than M+N, both S and L are integers, and S=L+1, the sending the SRSs to the network device includes: sending an SRS to the network device in a transmissions separately through an antenna of the first sub-receiver and an antenna of the second sub-receiver, where an SRS corresponding to an odd-numbered one among in the a transmissions is sent through the antenna of the first sub-receiver, an SRS corresponding to an even-numbered one among the a transmissions is sent through the antenna of the second sub-receiver, an SRS sent in each transmission corresponds to a different antenna, and a=S+L.

Based on this possible design, the first sub-receiver and the second sub-receiver can alternately send the SRS, to avoid waiting of switching time for performing transmit antenna switching on a same sub-receiver, thereby improving antenna switching and measurement efficiency.

In a possible design, the terminal device includes a first sub-receiver and a second sub-receiver, the first sub-receiver includes N antennas, the second sub-receiver includes M antennas, the SRS resource configured for the terminal device includes a first SRS resource and a second SRS resource, a port quantity of the first SRS resource is K, and a port quantity of the second SRS resource is H, where N, M, K, and H are positive integers, and values of K and H are different; and when K=N and H=M, the sending the SRSs to the network device includes: sending an SRS to the network device through all the antennas of the first sub-receiver; and sending an SRS to the network device through all the antennas of the second sub-receiver.

Based on this possible design, when the antenna sending capability of the terminal device matches the antenna quantity of each sub-receiver, antenna switching and measurement can be quickly completed through two SRS transmissions, and the network device can conveniently determine the sub-receiver corresponding to each port.

In a possible design, when K+H=N=M, the sending the SRSs to the network device includes: sending an SRS to the network device through K antennas of the first sub-receiver; sending an SRS to the network device through H antennas other than the K antennas of the first sub-receiver; sending an SRS to the network device through K antennas of the second sub-receiver; and sending an SRS to the network device through H antennas other than the K antennas of the second sub-receiver.

Based on this possible design, antenna switching and measurement can be conveniently and quickly performed on different sub-receivers by using two antenna sending capabilities of the terminal device, and the network device can conveniently determine the sub-receiver corresponding to each port.

In a possible design, when K-1=N=M=H+1, the sending the SRSs to the network device includes: sending an SRS to the network device through all the antennas of the first sub-receiver and a first antenna of the second sub-receiver; and sending an SRS to the network device through all the antennas except the first antenna of the second sub-receiver, where port indexes or cyclic shifts of channels of the antennas corresponding to the SRSs are different from each other.

Based on this possible design, antenna switching and measurement can be conveniently and quickly performed on different sub-receivers by using two antenna sending capabilities of the terminal device, and the network device can conveniently determine the sub-receiver corresponding to each port.

In a possible design, when K-1=N=M=H+1, and a value of N is an odd number, the sending the SRSs to the network device includes: sending an SRS to the network device through K/2 antennas of the first sub-receiver and k/2 antennas of the second sub-receiver; and sending an SRS to the network device through other H/2 antennas of the first sub-receiver and other H/2 antennas of the second sub-receiver, where port indexes or cyclic shifts of channels of the antennas corresponding to the SRSs are different from each other.

Based on this possible design, antenna switching and measurement can be conveniently and quickly performed on different sub-receivers by using two antenna sending capabilities of the terminal device, and the network device can conveniently determine the sub-receiver corresponding to each port.

In a possible design, the at least two sub-receivers each have a limited antenna sending capability, the terminal device includes a first sub-receiver and a second sub-receiver, the first sub-receiver includes N antennas, the second sub-receiver includes M antennas, a port quantity of an SRS resource applied to the first sub-receiver is A, and a port quantity of an SRS resource applied to the second sub-receiver is B, where N, M, A, and B are positive integers, N=M, A=B, N is S times A, and S is an integer; and the sending the SRSs to the network device includes: sending an SRS to the network device in S transmissions separately through A antennas of the first sub-receiver and B antennas of the second sub-receiver, where an SRS sent in each transmission corresponds to a different antenna, and port indexes or cyclic shifts of channels of the antennas corresponding to the SRSs are different from each other.

Based on this possible design, antenna switching and measurement can be conveniently performed when two sending-capability-limited sub-receivers that have a same sending capability are used as sub-receivers, and the network device can quickly determine the sub-receiver corresponding to each port.

In a possible design, the at least two sub-receivers each have a limited antenna sending capability, the terminal device includes a first sub-receiver and a second sub-receiver, the first sub-receiver includes N antennas, the second sub-receiver includes M antennas, the SRS resource configured for the terminal device includes a first SRS resource and a second SRS resource, a port quantity of the first SRS resource is 2A, a port quantity of the second SRS resource is 2B, the first sub-receiver and the second sub-receiver each apply A ports of the first SRS resource, and the first sub-receiver and the second sub-receiver each apply B ports of the second SRS resource, where N, M, A, and B are positive integers, and N=M=A+B; and the sending the SRSs to the network device includes: sending an SRS to the network device through A antennas of the first sub-receiver and A antennas of the second sub-receiver; and sending an SRS to the network device through B antennas other than the A antennas of the first sub-receiver and B antennas other than the A antennas of the second sub-receiver, where port indexes or cyclic shifts of channels of the antennas corresponding to the SRSs are different from each other.

Based on this possible design, antenna switching and measurement can be conveniently performed when two sending-capability-limited sub-receivers that have a same sending capability and each include two sending capabilities are used as sub-receivers, and the network device can quickly determine the sub-receiver corresponding to each port.

In a possible design, the at least two sub-receivers each have a limited antenna sending capability, the terminal device includes a first sub-receiver and a second sub-receiver, the first sub-receiver includes N antennas, the second sub-receiver includes M antennas, the port quantity of the SRS resource configured for the terminal device is 2A, and the first sub-receiver and the second sub-receiver each apply A ports of the SRS resource, where N, M, and A are positive integers, N is greater than M, N is S times A, M is L times A, and both S and L are integers; and the sending the SRSs to the network device includes: sending an SRS to the network device in L transmissions through A antennas of the first sub-receiver and A antennas of the second sub-receiver; and sending an SRS to the network device in S-L transmissions through the A antennas of the first sub-receiver, where an SRS sent in each transmission corresponds to a different antenna, and port indexes or cyclic shifts of channels of the antennas corresponding to the SRSs are different from each other.

Based on this possible design, antenna switching and measurement can be conveniently performed when two sending-capability-limited sub-receivers that have a same sending capability and for which an antenna quantity is an integer multiple of the sending capability are used as sub-receivers, and the network device can quickly determine the sub-receiver corresponding to each port.

In a possible design, the antenna included in the first sub-receiver and the antenna included in the second sub-receiver are separately predetermined based on antenna polarization and/or cabling.

Based on this possible design, an antenna can be disposed for each sub-receiver in advance based on a plan, cabling, or the like, to reduce interference between antennas.

In a possible design, the antenna included in the first sub-receiver and the antenna included in the second sub-receiver are separately determined by the terminal device based on a channel state information reference signal, or are separately determined by the network device based on the SRS.

Based on this possible design, flexibility of antennas of the sub-receivers can be improved, and interference between the antennas of the sub-receivers can be reduced.

In a possible design, an antenna set included in the sub-receiver corresponds to one codeword.

Based on this possible design, signal receiving performance of each sub-receiver can be improved, thereby improving performance of an entire receiver system.

In a possible design, an antenna set included in the sub-receiver corresponds to one code division multiplexing group.

Based on this possible design, signal receiving performance of each sub-receiver can be improved, thereby improving performance of an entire receiver system.

According to an eighth aspect, an embodiment of this application provides a communication apparatus. The apparatus has a function of implementing the method according to the seventh aspect. The function may be implemented by hardware, or may be implemented by hardware executing corresponding software. The hardware or the software includes one or more units or modules corresponding to the function of the method according to the seventh aspect, for example, a sending module and a receiving module.

The receiving module is configured to receive an SRS resource configured by a network device for a terminal device, where a port quantity of the SRS resource corresponds to an antenna sending capability of the terminal device, the antenna sending capability indicates a maximum quantity of antennas capable of being simultaneously used by the terminal device to send a signal, and the terminal device includes at least two sub-receivers.

The sending module is configured to send SRSs to the network device, where the SRSs are sent by the terminal device separately through antennas of different sub-receivers based on the SRS resource configured by the network device for the terminal device and an antenna quantity of each sub-receiver of the terminal device, so that the network device is able to determine, based on the port quantity of the SRS resource configured for the terminal device and the antenna quantity of each sub-receiver of the terminal device, a sub-receiver corresponding to a port corresponding to the SRS.

In a possible design, the terminal device includes a first sub-receiver and a second sub-receiver, the first sub-receiver includes N antennas, the second sub-receiver includes M antennas, and the port quantity of the SRS resource configured for the terminal device is K, where N, M, and K are positive integers; and when K is less than M+N, the sending module is specifically configured to: send an SRS to the network device in a transmissions through an antenna of the first sub-receiver, where an SRS sent in each transmission corresponds to a different antenna; and send an SRS to the network device in b transmissions through an antenna of the second sub-receiver, where an SRS sent in each transmission corresponds to a different antenna, N is S times K, M is L times K, a=S when S is an integer, or a is a value obtained by rounding up S when S is a non-integer, and b=L when L is an integer, or b is a value obtained by rounding up L when L is a non-integer.

In a possible design, when K=M+N, the sending module is specifically configured to: send the SRSs to the network device through all antennas of the first sub-receiver and the second sub-receiver, where port indexes, combs, or cyclic shifts of channels of the antennas corresponding to the SRSs are different from each other.

In a possible design, when K=M+N, the sending module is specifically configured to: send the SRSs to the network device through all antennas of the first sub-receiver and the second sub-receiver, where K ports of the SRS resource are used for sending on X adjacent orthogonal frequency division multiplexing OFDM symbols, different OFDM symbols are sent through corresponding sub-receivers based on a preset correspondence between an OFDM symbol and a sub-receiver, and different OFDM symbols correspond to different ports.

In a possible design, when M=N=K+1, the sending module is specifically configured to: send an SRS to the network device through K antennas of the first sub-receiver; send an SRS to the network device through an antenna other than the K antennas of the first sub-receiver and a first antenna of the second sub-receiver; and send an SRS to the network device through all the antennas except the first antenna of the second sub-receiver, where port indexes or cyclic shifts of channels of the antennas corresponding to the SRSs are different from each other.

In a possible design, the terminal device includes a first sub-receiver and a second sub-receiver, the first sub-receiver includes N antennas, the second sub-receiver includes M antennas, and the port quantity of the SRS resource configured for the terminal device is K, where N, M, and K are positive integers, N is S times K, and M is L times K; and when K is less than M+N, both S and L are integers, and S=L+1, the sending module is specifically configured to: send an SRS to the network device in a transmissions separately through an antenna of the first sub-receiver and an antenna of the second sub-receiver, where an SRS corresponding to an odd-numbered one among the a transmissions is sent through the antenna of the first sub-receiver, an SRS corresponding to an even-numbered one among the a transmissions is sent through the antenna of the second sub-receiver, an SRS sent in each transmission corresponds to a different antenna, and a=S+L.

In a possible design, the terminal device includes a first sub-receiver and a second sub-receiver, the first sub-receiver includes N antennas, the second sub-receiver includes M antennas, the SRS resource configured for the terminal device includes a first SRS resource and a second SRS resource, a port quantity of the first SRS resource is K, and a port quantity of the second SRS resource is H, where N, M, K, and H are positive integers, and values of K and H are different; and when K=N and H=M, the sending module is specifically configured to: send an SRS to the network device through all the antennas of the first sub-receiver; and send an SRS to the network device through all the antennas of the second sub-receiver.

In a possible design, when K+H=N=M, the sending module is specifically configured to: send an SRS to the network device through K antennas of the first sub-receiver; send an SRS to the network device through H antennas other than the K antennas of the first sub-receiver; send an SRS to the network device through K antennas of the second sub-receiver; and send an SRS to the network device through H antennas other than the K antennas of the second sub-receiver.

In a possible design, when K-1=N=M=H+1, the sending module is specifically configured to: send an SRS to the network device through all the antennas of the first sub-receiver and a first antenna of the second sub-receiver; and send an SRS to the network device through all the antennas except the first antenna of the second sub-receiver, where port indexes or cyclic shifts of channels of the antennas corresponding to the SRSs are different from each other.

In a possible design, when K-1=N=M=H+1, and a value of N is an odd number, the sending module is specifically configured to: send an SRS to the network device through K/2 antennas of the first sub-receiver and k/2 antennas of the second sub-receiver; and send an SRS to the network device through other H/2 antennas of the first sub-receiver and other H/2 antennas of the second sub-receiver, where port indexes or cyclic shifts of channels of the antennas corresponding to the SRSs are different from each other.

In a possible design, the at least two sub-receivers each have a limited antenna sending capability, the terminal device includes a first sub-receiver and a second sub-receiver, the first sub-receiver includes N antennas, the second sub-receiver includes M antennas, a port quantity of an SRS resource applied to the first sub-receiver is A, and a port quantity of an SRS resource applied to the second sub-receiver is B, where N, M, A, and B are positive integers, N=M, A=B, N is S times A, and S is an integer; and the sending module is specifically configured to: send an SRS to the network device in S transmissions separately through A antennas of the first sub-receiver and B antennas of the second sub-receiver, where an SRS sent in each transmission corresponds to a different antenna, and port indexes or cyclic shifts of channels of the antennas corresponding to the SRSs are different from each other.

In a possible design, the at least two sub-receivers each have a limited antenna sending capability, the terminal device includes a first sub-receiver and a second sub-receiver, the first sub-receiver includes N antennas, the second sub-receiver includes M antennas, the SRS resource configured for the terminal device includes a first SRS resource and a second SRS resource, a port quantity of the first SRS resource is 2A, a port quantity of the second SRS resource is 2B, the first sub-receiver and the second sub-receiver each apply A ports of the first SRS resource, and the first sub-receiver and the second sub-receiver each apply B ports of the second SRS resource, where N, M, A, and B are positive integers, and N=M=A+B; and the sending module is specifically configured to: send an SRS to the network device through A antennas of the first sub-receiver and A antennas of the second sub-receiver; and send an SRS to the network device through B antennas other than the A antennas of the first sub-receiver and B antennas other than the A antennas of the second sub-receiver, where port indexes or cyclic shifts of channels of the antennas corresponding to the SRSs are different from each other.

In a possible design, the at least two sub-receivers each have a limited antenna sending capability, the terminal device includes a first sub-receiver and a second sub-receiver, the first sub-receiver includes N antennas, the second sub-receiver includes M antennas, the port quantity of the SRS resource configured for the terminal device is 2A, and the first sub-receiver and the second sub-receiver each apply A ports of the SRS resource, where N, M, and A are positive integers, N is greater than M, N is S times A, M is L times A, and both S and L are integers; and the sending module is specifically configured to: send an SRS to the network device in L transmissions through A antennas of the first sub-receiver and A antennas of the second sub-receiver; and send an SRS to the network device in S-L transmissions through the A antennas of the first sub-receiver, where an SRS sent in each transmission corresponds to a different antenna, and port indexes or cyclic shifts of channels of the antennas corresponding to the SRSs are different from each other.

In a possible design, the antenna included in the first sub-receiver and the antenna included in the second sub-receiver are separately predetermined based on antenna polarization and/or cabling.

In a possible design, the antenna included in the first sub-receiver and the antenna included in the second sub-receiver are separately determined by the terminal device based on a channel state information reference signal, or are separately determined by the network device based on the SRS.

In a possible design, an antenna set included in the sub-receiver corresponds to one codeword.

In a possible design, an antenna set included in the sub-receiver corresponds to one code division multiplexing group.

According to a ninth aspect, an embodiment of this application further provides a communication apparatus, including a memory and a processor. The processor is configured to execute computer instructions stored in the memory, and when the computer instructions are executed, the apparatus is enabled to perform the method according to any one of the seventh aspect or the possible designs of the seventh aspect.

According to a tenth aspect, an embodiment of this application further provides a communication apparatus, including a processor and an interface circuit. The processor is configured to communicate with another apparatus through the interface circuit, and perform the method according to any one of the seventh aspect or the possible designs of the seventh aspect.

The communication apparatus according to the eighth aspect to the tenth aspect may be used in a terminal device.

According to an eleventh aspect, an embodiment of this application further provides a computer-readable storage medium. The computer-readable storage medium stores computer instructions. When the computer instructions are run on a terminal device or a chip built in the terminal device, the terminal device is enabled to perform the method according to the seventh aspect.

According to a twelfth aspect, an embodiment of this application further provides a computer program product including instructions. When the computer program product runs on a computer, the computer is enabled to perform the method according to any one of the seventh aspect or the possible designs of the seventh aspect.

It may be understood that for beneficial effect that can be achieved in the eighth aspect to the twelfth aspect provided above, refer to beneficial effect in any one of the seventh aspect and the possible designs of the seventh aspect. Details are not described herein again.

According to a thirteenth aspect, an embodiment of this application further provides a communication system, including a network device and a terminal device. The network device performs the method according to any one of the first aspect or the possible designs of the first aspect, and the terminal device performs the method according to any one of the seventh aspect or the possible designs of the seventh aspect.

It may be understood that for beneficial effect that can be achieved in the thirteenth aspect provided above, refer to the beneficial effect described in the first aspect, the seventh aspect, and the like. Details are not described herein again.

### BRIEF DESCRIPTION OF DRAWINGS

FIG. 1 is a composition diagram of a communication system according to an embodiment of this application;
FIG. 2 is a composition diagram of a communication apparatus according to an embodiment of this application;
FIG. 3 is a schematic flowchart of a communication method according to an embodiment of this application;
FIG. 4 is a composition diagram of a receiver according to an embodiment of this application;
FIG. 5 is a composition diagram of another receiver according to an embodiment of this application;
FIG. 6 is a composition diagram of another receiver according to an embodiment of this application;
FIG. 7 is a composition diagram of another receiver according to an embodiment of this application;
FIG. 8 is a composition diagram of another communication apparatus according to an embodiment of this application; and
FIG. 9 is a composition diagram of another communication apparatus according to an embodiment of this application.

### DESCRIPTION OF EMBODIMENTS

With development of 5G, market requirements are increasingly high. One of current requirements is that a downlink peak transmission rate needs to be increased to 1.6 Gbps. To meet this requirement, for example, a 6R receiver that is more advanced than a currently used 4R receiver needs to be used in a downlink transmission process to effectively improve spectral efficiency. The 6R receiver indicates a receiver device that includes six receive antennas. Compared with the 4R receiver, the 6R receiver can significantly increase a downlink throughput of a single user in a cell and can also expand coverage of a cell edge user.

However, when multi-stream transmission is performed (a quantity of transport streams is greater than 4), a conventional 6R receiver solution presents features of high implementation difficulty and high calculation complexity. A feasible solution is that the 6R receiver is split into two sub-receivers including a plurality of receive antennas, and each sub-receiver independently receives and processes signals. This can effectively resolve problems of high implementation difficulty and high calculation complexity of the existing 6R receiver.

However, when a terminal uses this sub-receiver architecture, a base station cannot know a correspondence between sub-receivers and a plurality of channels (namely, antenna ports respectively corresponding to a plurality of antennas) that are obtained through one time of antenna switching and measurement of a sounding reference signal. Consequently, the base station cannot perform a corresponding precoding design (for example, EZF precoding), and a communication capability of a split 6R receiver cannot be ensured.

In view of this, embodiments of this application provide a communication method. When a terminal device includes at least two sub-receivers, the method may include: The terminal device (or referred to as user equipment (User Equipment, UE)) sends an SRS to a network device separately through antennas of different sub-receivers based on an antenna quantity of each sub-receiver of the terminal device and a sounding reference signal (Sounding Reference Signal, SRS) resource that is configured by the network device for the terminal device and whose port quantity corresponds to an antenna sending capability of the terminal device. Therefore, when receiving the SRS from the terminal device, the network device may determine, based on the port quantity of the SRS resource configured for the terminal device and the antenna quantity of each sub-receiver of the terminal device, a sub-receiver corresponding to an antenna port of the SRS.

The antenna sending capability indicates a maximum quantity of antennas capable of being simultaneously used by the terminal device to send a signal. The sub-receiver is a module or component having an independent receiving and sending capability, and is a part of an entire receiver system. In other words, the entire receiver system may be formed by a plurality of sub-receivers.

During actual application, the network device may configure a quantity of SRS resources for the terminal device based on the antenna sending capability of the terminal device and the antenna quantity of each sub-receiver, so that the terminal device uses one SRS resource in each transmission of the SRS. In addition, when the terminal device sends the SRS based on the SRS resource, each port may correspond to one antenna for SRS sending. In other words, different antennas correspond to different ports.

When sending the SRS based on the SRS resource, based on an actual requirement, the terminal device may send the SRS through all ports of the SRS resource, or may send the SRS resource through some ports of the SRS resource. For example, when the SRS resource includes three ports, if a sub-receiver includes only two antennas, the terminal device may send the SRS through the two antennas of the sub-receiver and two ports of the SRS resource, instead of sending the SRS through all the ports of the SRS resource.

Optionally, the antenna sending capability and the antenna quantity of each sub-receiver may be reported by the terminal and then obtained by a base station, or may be obtained by the base station in another manner in a related protocol. This is not limited herein. The antenna sending capability may alternatively be determined based on a receiving and sending capability of the terminal device. This is not limited herein.

In the method, the terminal device may sequentially send the SRS in one or more transmissions through antennas of different sub-receivers based on the port quantity of the SRS resource configured by the network device (for example, the base station) for the terminal device and the antenna quantity of each sub-receiver. Therefore, after receiving the SRS, the network device can determine, based on the port quantity of the SRS resource configured by the network device for the terminal device and the antenna quantity of each sub-receiver, sub-receivers corresponding to ports used for receiving different SRSs. For example, when the antenna sending capability of the terminal device is 2, and the antenna quantity corresponding to each sub-receivers is 2, the network device may configure, for the terminal device, an SRS resource whose port quantity is 2, and the terminal device may sequentially send the SRS through two antennas of each sub-receiver based on a sub-receiver sequence. Therefore, when receiving the SRS in a 1^{st} reception, the network device may determine that two ports corresponding to the SRS correspond to the first sub-receiver in the sub-receiver sequence; when the SRS is received in a 2^{nd} reception, determine that two ports corresponding to the SRS correspond to the second sub-receiver in the sub-receiver sequence; and the like. Therefore, the network device can determine, according to the method, the sub-receiver corresponding to the port (or a channel) corresponding to the SRS received by the network device, so that the network device can perform a corresponding precoding design (for example, EZF precoding), to ensure a communication capability of each split sub-receiver.

The following describes the communication method provided in embodiments of this application by using an example with reference to the accompanying drawings.

It should be noted that, in descriptions of this application, words such as "first" and "second" are merely used for distinguishing description, and are not used to specifically limit a feature. In descriptions of embodiments of this application, the term "and/or" describes an association relationship between associated objects and indicates that three relationships may exist. For example, A and/or B may indicate the following three cases: Only A exists, both A and B exist, and only B exists. In this application, "at least one" means one or more, and "a plurality of' means two or more.

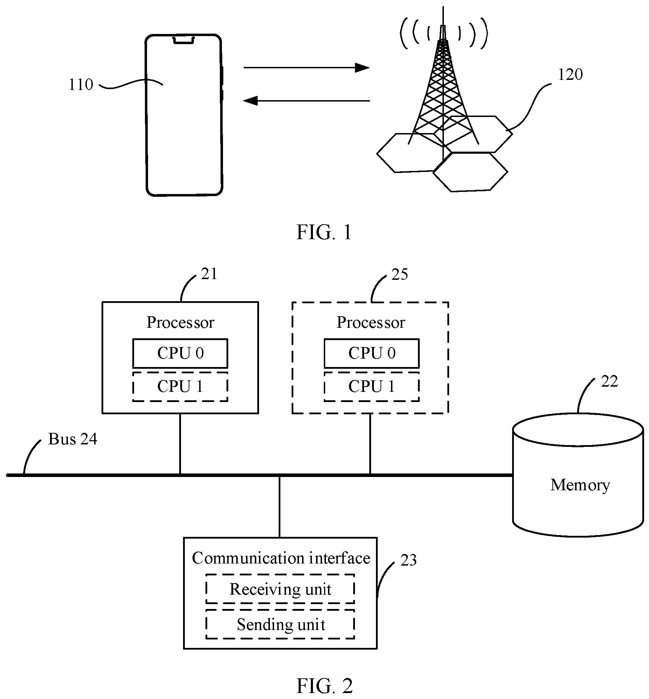

The communication method provided in embodiments of this application may be applied to a communication system including a network device and a terminal device. FIG. 1 is a composition diagram of the communication system according to an embodiment of this application. As shown in FIG. 1, the communication system may include at least one terminal device 110 (FIG. 1 shows one terminal device 110 as an example) and at least one network device 120 (FIG. 1 shows one network device 120 as an example).

The network device 120 may also be referred to as a radio access network device or a next-generation radio access network device. The terminal device 110 may communicate with the network devices 120. The network device 120 may provide function services such as radio resource management, quality of service management, and data encryption and compression for the terminal device 110. Different network devices 120 may communicate with each other through an Xn interface. Different terminal devices 110 may exchange information and communicate with each other through the network device 120.

The terminal device 110 is located in coverage of one or more cells (carriers) provided by the network device 120, and there may be one or more cells serving the terminal device 110. When there are a plurality of cells serving the terminal device 110, the terminal device 110 may operate in a CA transmission mode, a dual connectivity (dual connectivity, DC) transmission mode, or a coordinated multi-point transmission mode.

Optionally, the communication system may be a wideband code division multiple access (wideband code division multiple access, WCDMA) system, a long term evolution (long term evolution, LTE) system, a long term evolution-advanced (LTE advanced, LTE-A) system, an LTE frequency division duplex (frequency division duplex, FDD) system, a universal mobile telecommunications system (universal mobile telecommunications system, UMTS), a 5G NR system, another wireless communication system to which an OFDM technology is applied, or the like. A specific type of the communication system is not limited in this application.

For example, when the communication system is a 5G NR system, the communication system may further include a core network device (not shown in the figure), and the core network device may communicate with the network device 120 through a next generation (next generation, NG) interface.

Optionally, the terminal device 110 in the communication system may also be referred to as user equipment (user equipment, UE), a mobile station (mobile station, MS), a mobile terminal (mobile terminal, MT), or the like. The terminal device 110 may be a device that provides voice and/or data connectivity for a user, for example, may be a mobile phone ("cellular" phone), a mobile phone, a computer, a cordless phone, a session initiation protocol (session initiation protocol, SIP) phone, a wireless local loop (wireless local loop, WLL) station, a personal digital assistant (personal digital assistant, PDA), a laptop computer, a handheld communication device, a handheld computing device, a satellite wireless device, a wireless modem card, a television set top box (set top box, STB), customer premises equipment (customer premises equipment, CPE), a wearable device (for example, a smart watch, a smart band, or a pedometer), a vehicle-mounted device (for example, a car, a bicycle, an electric vehicle, an airplane, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electric meter), a smart robot, a workshop device, a wireless terminal in self driving (self driving), a wireless terminal in remote surgery (remote medical surgery), a wireless terminal in a smart grid (smart grid), a wireless terminal in transportation security (transportation safety), a wireless terminal in a smart city (smart city), a wireless terminal in a smart home (smart home), a flight device (for example, a smart robot, a hot air balloon, an uncrewed aerial vehicle, or an airplane), or another device used for communication in a wireless system, for example, another MTC terminal in IoT. A specific representation form of the terminal device 110 is not limited in this application.

The network device 120 may be an access network device of the communication system, for example, a base station. Optionally, in this embodiment of this application, the network device 120 may include a macro base station, a micro base station (also referred to as a small cell), or the like in various forms. For example, the network device 120 may include a base station in WCDMA or LTE, a next generation NodeB (next generation NodeB, gNB), a next generation evolved NodeB (next generation evolved NodeB, Ng-eNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), a wireless fidelity (wireless fidelity, Wi-Fi) access point (access point, AP), or the like.

It may be understood that the communication system shown in FIG. 1 is merely intended to describe the technical solutions in embodiments of this application more clearly, and does not constitute a limitation on the technical solutions provided in embodiments of this application. For example, the communication system may further include another device, for example, a network control device. The network control device may be an operation, administration, and maintenance (operation administration and maintenance, OAM) system, which is also referred to as a network management system. The network control device may manage the network device 120.

In addition, a person of ordinary skill in the art may learn that, with evolution of a network architecture and emergence of a new service scenario, the technical solutions provided in embodiments of this application are also applicable to a similar technical problem.

FIG. 2 is a composition diagram of a communication apparatus according to an embodiment of this application. The communication apparatus may be the network device 120 or the terminal device 110 in the communication system shown in FIG. 1. As shown in FIG. 2, the communication apparatus may include at least one processor 21, a memory 22, a communication interface 23, and a bus 24.

The following specifically describes the components of the communication apparatus with reference to FIG. 2.

The processor 21 is a control center of the communication apparatus, and may be one processor or may be a collective name of a plurality of processing elements. For example, the processor 21 may be a central processing unit (central processing unit, CPU), or may be an application-specific integrated circuit (application-specific integrated circuit, ASIC), or may be configured as one or more integrated circuits implementing embodiments of this application, for example, one or more microprocessors (digital signal processors, DSPs), or one or more field programmable gate arrays (field programmable gate arrays, FPGAs).

The processor 21 may execute various functions of the communication apparatus by running or executing a software program stored in the memory 22 and invoking data stored in the memory 22. For example, the steps performed by the communication apparatus in the signal transmission method provided in embodiments of this application may be performed.

During specific implementation, in an embodiment, the processor 21 may include one or more CPUs, for example, a CPU 0 and a CPU 1 shown in FIG. 2.

During specific implementation, in an embodiment, the communication apparatus may include a plurality of processors, for example, a processor 21 and a processor 25 shown in FIG. 2. Each of the processors may be a single-core processor (single-CPU), or may be a multi-core processor (multi-CPU). The processor herein may be one or more devices, circuits, and/or processing cores configured to process data (for example, computer program instructions).

The memory 22 is configured to store a software program for performing the method steps performed by the communication apparatus in the solutions of this application, and the processor 21 controls the execution. The memory 22 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of an instruction or a data structure and that can be accessed by a computer. However, this is not limited thereto.

The memory 22 may exist independently and be connected to the processor 21 through the bus 24. Alternatively, the memory 22 may be integrated with the processor 21. This is not limited herein.

The communication interface 23 is configured to communicate with another device or communication network through any transceiver-type apparatus. The communication interface 23 may be an Ethernet interface, a radio access network (radio access network, RAN) interface, a wireless local area network (wireless local area network, WLAN) interface, or the like. The communication interface 23 may include a receiving unit for implementing a receiving function and a sending unit for implementing a sending function.

The bus 24 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 2, but this does not mean that there is only one bus or only one type of bus.

Although the bus 24 is used in FIG. 2, it may be understood that the bus may alternatively be replaced with a connection relationship in another form, and is not limited to the bus itself.

For example, the following describes the communication method by using an example in which the communication method provided in this application is applied to a communication system including a terminal device and a network device, and the terminal device includes a first sub-receiver and a second sub-receiver.

Optionally, the first sub-receiver may include N antennas, the second sub-receiver may include M antennas, and a port quantity of an SRS resource configured by the network device for the terminal device may be K, where N, M, and K are positive integers.

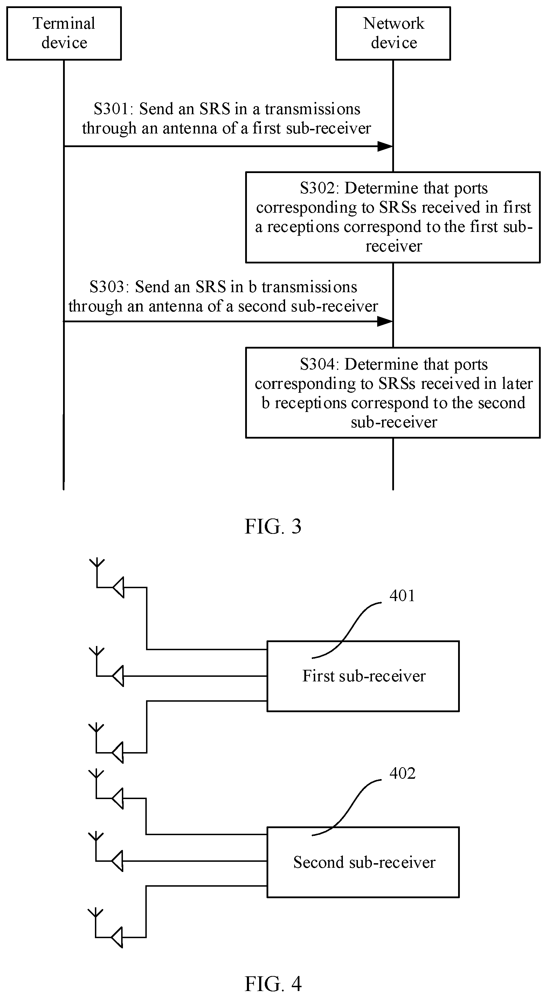

Therefore, based on a relationship between N, M, and K, when K is less than M+N, as shown in FIG. 3, the communication method may include the following S301 to S304.

S301: The terminal device sends an SRS to the network device in a transmissions through an antenna of the first sub-receiver.

An SRS sent in each transmission correspond to a different antenna.

S302: The network device determines that ports corresponding to SRSs received in first a receptions correspond to the first sub-receiver.

S303: The terminal device sends an SRS to the network device in b transmissions through an antenna of the second sub-receiver.

An SRS sent in each transmission correspond to a different antenna.

S304: The network device determines that ports corresponding to SRSs received in later b receptions correspond to the second sub-receiver.

It should be noted that an antenna quantity N of the first sub-receiver is S times the port quantity K of the SRS resource, and an antenna quantity M of the second sub-receiver is L times K, where a=S when S is an integer, or a is a value obtained by rounding up S when S is a non-integer; and b=L when L is an integer, or b is a value obtained by rounding up L when L is a non-integer.

A quantity of SRS resources configured by the network device for the terminal device may be determined based on an antenna sending capability of the terminal device and an antenna quantity of each sub-receiver, so that the terminal device uses one SRS resource in each transmission of the SRS. In addition, in each transmission of the SRS, different antennas correspond to different ports.

For example, the port quantity K of the SRS resource configured by the network device for the terminal device is 1, and as shown in FIG. 4, an antenna quantity N of a first sub-receiver 401 is 3, and an antenna quantity M of a second sub-receiver 402 is 3. Because both N and M are integer multiples of K, the network device may configure six SRS resources for the terminal device, and the terminal device may sequentially send the SRS to the network device in three transmissions (one SRS resource is used in each transmission) through the three antennas of the first sub-receiver 401. In addition, the terminal device sequentially sends the SRS to the network device in three transmissions (one SRS resource is used in each transmission) through the three antennas of the second sub-receiver 402. Therefore, when receiving SRSs in first three receptions, the network device may determine that ports corresponding to the corresponding SRSs correspond to the three antennas of the first sub-receiver 401. Correspondingly, when receiving SRSs in later three receptions, the network device may determine that ports corresponding to the corresponding SRSs correspond to the three antennas of the second sub-receiver 402.

In other words, for UE having a 1-transmit-6-receive (1T6R) capability, three ports for three adjacent times of antenna switching and measurement correspond to three antennas of one sub-receiver.

For another example, the antenna quantity N of the first sub-receiver is 3, the antenna quantity M of the second sub-receiver is 3, and the port quantity K of the SRS resource configured for the terminal device is 2. Because both N and M are non-integer multiples of K, and are rounded up to 2, the network device may configure four SRS resources for the terminal device. The terminal device may send the SRS in a 1^{st} transmission through two ports that correspond to two antennas of the first sub-receiver and that are of a 1^{st} SRS resource, and send the SRS in a 2^{nd} transmission through one port that corresponds to the remaining one antenna of the first sub-receiver and that is of a 2^{nd} SRS resource (the other port may be muted). Therefore, the network device can determine that a total of three ports used for receiving SRSs in first two receptions correspond to the first sub-receiver. Correspondingly, the terminal device may send the SRS in a 3^{rd} transmission through two ports that correspond to two antennas of the second sub-receiver and that are of a 3^{rd} SRS resource, and send the SRS in a 4^{th} transmission through one port that corresponds to the remaining one antenna of the second sub-receiver and that is of the fourth SRS resource (the other port may be muted). Therefore, the network device can determine that a total of three ports used for receiving SRSs in later two transmissions correspond to the second sub-receiver.

In other words, for UE having a 2-transmit-6-receive (2T6R) capability, all channel measurement is completed through four adjacent times of antenna switching. Three ports for the first two times of antenna switching and measurement correspond to three antennas of a 3R sub-receiver, and three ports for the later two times of antenna switching and measurement correspond to three antennas of another 3R sub-receiver.

For another example, the antenna quantity N of the first sub-receiver is 3, the antenna quantity M of the second sub-receiver is 3, and the port quantity K of the SRS resource configured for the terminal device is 3. Because both N and M are integer multiples of K, the network device may configure two SRS resources for the terminal device. The terminal device may send the SRS to the network device in one transmission through three ports that correspond to three antennas of the first sub-receiver and that are of one SRS resource. In addition, the terminal device may send the SRS to the network device in one transmission through three ports that correspond to three antennas of the second sub-receiver and that are of another SRS resource. Therefore, when receiving the SRS in a 1^{st} reception, the network device may determine that ports corresponding to corresponding SRSs correspond to the three antennas of the first sub-receiver. Correspondingly, when receiving the SRS in a 2^{nd} reception, the network device may determine that ports corresponding to corresponding SRSs correspond to the three antennas of the second sub-receiver.

In other words, for UE having a 3-transmit-6-receive (3T6R) capability, three ports for one time of antenna switching and measurement correspond to three antennas of a 3R sub-receiver.

For another example, the antenna quantity N of the first sub-receiver is 3, the antenna quantity M of the second sub-receiver is 3, and the port quantity K of the SRS resource configured for the terminal device is 4. Because both N and M are non-integer multiples of K, and are rounded up to 1, the network device may configure two SRS resources for the terminal device. The terminal device may send the SRS in a 1^{st} transmission through three ports that correspond to three antennas of the first sub-receiver and that are of a 1^{st} SRS resource (the other port may be muted). Therefore, the network device can determine that a total of three ports used for receiving the SRS in the 1^{st} reception correspond to the first sub-receiver. Correspondingly, the terminal device may send the SRS in a 2^{nd} transmission through three ports that correspond to three antennas of the second sub-receiver and that are of a 2^{nd} SRS resource (the other port may be muted). Therefore, the network device can determine that a total of three ports used for receiving the SRS in the 2^{nd} reception correspond to the second sub-receiver.

In other words, for UE having a 4-transmit-6-receive (4T6R) capability, three ports for one time of antenna switching and measurement correspond to three antennas of a 3R sub-receiver.

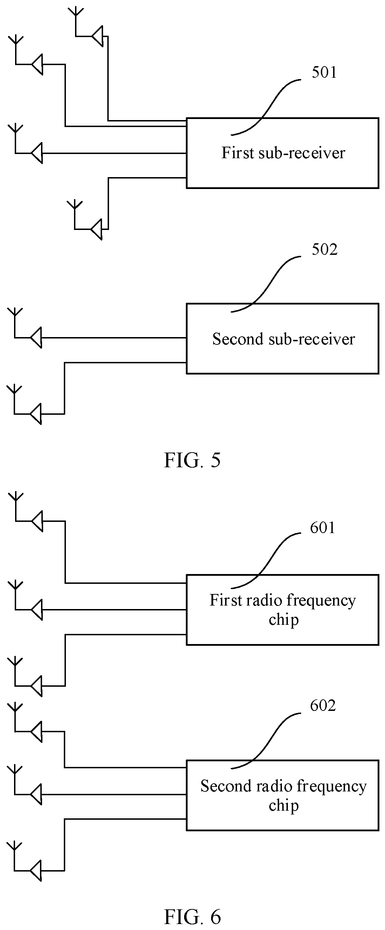

For another example, the port quantity K of the SRS resource configured for the terminal device is 1, and as shown in FIG. 5, an antenna quantity N of a first sub-receiver 501 is 4, and an antenna quantity M of a second sub-receiver 502 is 2. Because both N and M are integer multiples of K, the network device may configure six SRS resources for the terminal device. The terminal device may sequentially send the SRS to the network device in four transmissions (one SRS resource is used in each transmission) through the four antennas of the first sub-receiver 501. In addition, the terminal device sequentially sends the SRS to the network device in two transmissions (one SRS resource is used in each transmission) through the two antennas of the second sub-receiver 502. Therefore, when receiving SRSs in first four receptions, the network device may determine that ports corresponding to the corresponding SRSs correspond to the four antennas of the first sub-receiver 501. Correspondingly, when receiving SRSs in later two receptions, the network device may determine that ports corresponding to the corresponding SRSs correspond to the two antennas of the second sub-receiver 502.

In other words, for UE having a 1-transmit-6-receive (1T6R) capability, four ports for four adjacent times of antenna switching and measurement correspond to four antennas of a 4R sub-receiver, and two ports for two adjacent times of antenna switching and measurement correspond to two antennas of a 2R sub-receiver.

For another example, the antenna quantity N of the first sub-receiver is 4, the antenna quantity M of the second sub-receiver is 2, and the port quantity K of the SRS resource configured for the terminal device is 2. Because both N and M are integer multiples of K, the network device may configure three SRS resources for the terminal device. The terminal device may send the SRS in a 1^{st} transmission through two ports that correspond to two antennas of the first sub-receiver and that are of a 1^{st} SRS resource, and then send the SRS in a 2^{nd} transmission through two ports that correspond to the other two antennas of the first sub-receiver and that are of a 2^{nd} SRS resource, so that when receiving SRSs in first two receptions, the network device can determine that ports of the SRSs corresponds to the first sub-receiver. The terminal device may further send the SRS in a 3^{rd} transmission through two ports that correspond to two antennas of the second sub-receiver and that are of a 3^{rd} SRS resource, so that when receiving SRSs in a 3^{rd} reception, the network device can determine that ports corresponding to the SRSs correspond to the second sub-receiver.

In other words, for UE having a 2-transmit-6-receive (2T6R) capability, all channel measurement is completed through three consecutive times of antenna switching. Four ports for the first two times of antenna switching and measurement correspond to four antennas of a 4R sub-receiver, and two ports for the third time of antenna switching and measurement correspond to two antennas of a 2R sub-receiver.

According to the method shown in FIG. 3, the network device can configure the corresponding SRS resource for the terminal device based on the antenna sending capability of the terminal device and the antenna quantity of each sub-receiver, so that the terminal device sequentially sends the SRS through antennas of different sub-receivers based on a specific quantity of times and sequence. Therefore, the network device can determine, based on the port quantity of the SRS resource configured for the terminal device and the antenna quantity of each sub-receiver, the sub-receiver corresponding to the port corresponding to the corresponding SRS according to a policy matching a manner of sending the SRS by the terminal device.

Optionally, based on a relationship between N, M, and K, when K=M+N, the terminal device may send the SRSs to the network device through all antennas of the first sub-receiver and the second sub-receiver.

Port indexes, combs, or cyclic shifts of channels of the antennas corresponding to the SRSs are different from each other. Therefore, the network device may distinguish between ports based on a port index, a comb, or a cyclic shift of a channel of each antenna. Therefore, a correspondence between port indexes, combs, or cyclic shifts of different channels and sub-receivers may be preset, and the network device may determine, based on the correspondence, a sub-receiver corresponding to a port corresponding to each channel.

For example, the antenna quantity N of the first sub-receiver is 3, the antenna quantity M of the second sub-receiver is 3, and the port quantity K of the SRS resource configured for the terminal device is 6. In this case, the network device may configure one SRS resource for the terminal device. The terminal device may send the SRS through a total of six ports that correspond to six antennas of the first sub-receiver and the second sub-receiver and that are of the SRS resource. Therefore, the network device may distinguish between different ports based on the port index, the comb, or the cyclic shift of the channel of each antenna, and then determine, based on the preset correspondence between the port index, the comb, or the cyclic shift and the sub-receiver, sub-receivers corresponding to different ports. For example, the preset correspondence may be set as follows: Three ports with port indexes 0, 1, and 2 correspond to the first sub-receiver, and three ports with port indexes 3, 4, and 5 correspond to the second sub-receiver. Therefore, the network device may determine that ports with port indexes 0, 1, and 2 in channels of the antennas correspond to the first sub-receiver, and correspondingly, determine that the other three ports correspond to the second sub-receiver.

In other words, for UE having a 6-transmit-6-receive (6T6R) capability, the six ports may be split into two groups based on different port indexes/combs/cyclic shifts, and respectively correspond to three antennas of the two sub-receivers.

For another example, the antenna quantity N of the first sub-receiver is 4, the antenna quantity M of the second sub-receiver is 2, and the port quantity K of the SRS resource configured for the terminal device is 6. In this case, the network device may configure one SRS resource for the terminal device. The terminal device may send the SRS through a total of six ports that correspond to six antennas of the first sub-receiver and the second sub-receiver and that are of the SRS resource. Therefore, the network device may distinguish between different ports based on the port index, the comb, or the cyclic shift of the channel of each antenna, and then determine, based on the preset correspondence between the port index, the comb, or the cyclic shift and the sub-receiver, sub-receivers corresponding to different ports. For example, the preset correspondence may be set as follows: Four ports with port indexes 0, 1, 2, and 3 correspond to the first sub-receiver, and two ports with port indexes 4 and 5 correspond to the second sub-receiver. Therefore, the network device may determine that ports with port indexes 0, 1, 2, and 3 in channels of the antennas correspond to the first sub-receiver, and correspondingly, determine that the other two ports correspond to the second sub-receiver.

In other words, for UE having a 6-transmit-6-receive (6T6R) capability, the six ports may be split into a 4-port group and a 2- port group based on different port indexes/combs/cyclic shifts, and correspond to four- and two- antenna sub-receivers, respectively.

In this way, when the antenna sending capability of the terminal device is the same as a total antenna quantity of the sub-receivers, antenna switching and measurement can be performed on all antennas through only one SRS transmission, so that the terminal can determine a sub-receiver corresponding to each port.

Optionally, when K=M+N, if K ports of the SRS resource are used for sending on X adjacent orthogonal frequency division multiplexing (Orthogonal frequency division multiplexing, OFDM) symbols, when sending the SRSs to the network device through all the antennas of the first sub-receiver and the second sub-receiver, the terminal device may further send different OFDM symbols through corresponding sub-receivers based on a preset correspondence between an OFDM symbol and a sub-receiver, and different OFDM symbols correspond to different ports. Therefore, the network device can determine, based on the preset correspondence between the OFDM symbol and the sub-receiver, a sub-receiver corresponding to a port corresponding to each OFDM symbol of the SRS.

For example, the antenna quantity N of the first sub-receiver is 3, the antenna quantity M of the second sub-receiver is 3, the port quantity K of the SRS resource configured for the terminal device is 6, and six ports of the SRS are used for sending on two adjacent OFDM symbols. In this case, the network device may configure one SRS resource for the terminal device. The terminal device may send the SRS simultaneously through all the antennas of the first sub-receiver and the second sub-receiver. In addition, during sending, a 1^{st} OFDM symbol is sent through three ports that correspond to the three antennas of the first sub-receiver and that are of the SRS resource, and a 2^{nd} OFDM symbol is sent through other three ports that correspond to the three antennas of the second sub-receiver and that are of the SRS resource. Therefore, when receiving the 1^{st} OFDM symbol, the network device may determine that the three ports corresponding to the symbol correspond to the first sub-receiver, and when receiving the 2^{nd} OFDM symbol, determine that the three ports corresponding to the symbol correspond to the second sub-receiver.

In other words, for UE having a 6-transmit-6-receive (6T6R) capability, if six ports of one SRS resource are used for sending on two adjacent OFDM symbols, three ports of one OFDM symbol correspond to three antennas of one sub-receiver.

For another example, the antenna quantity N of the first sub-receiver is 4, the antenna quantity M of the second sub-receiver is 2, the port quantity K of the SRS resource configured for the terminal device is 6, and six ports of the SRS are used for sending on two adjacent OFDM symbols. In this case, the network device may configure one SRS resource for the terminal device. The terminal device may send the SRS simultaneously through all the antennas of the first sub-receiver and the second sub-receiver. In addition, during sending, a 1^{st} OFDM symbol is sent through four ports that correspond to the four antennas of the first sub-receiver and that are of the SRS resource, and a 2^{nd} OFDM symbol is sent through two ports that correspond to the two antennas of the second sub-receiver and that are of the SRS resource. Therefore, when receiving the 1^{st} OFDM symbol, the network device may determine that the four ports corresponding to the symbol correspond to the first sub-receiver, and when receiving the 2^{nd} OFDM symbol, determine that the two ports corresponding to the symbol correspond to the second sub-receiver.

In other words, for UE having a 6-transmit-6-receive (6T6R) capability, if six ports of one SRS resource are used for sending on two adjacent OFDM symbols, four ports of one OFDM symbol correspond to four antennas of a 4R sub-receiver, and two ports of the other OFDM symbol correspond to two antennas of a 2R sub-receiver.

For another example, the antenna quantity N of the first sub-receiver is 4, the antenna quantity M of the second sub-receiver is 2, the port quantity K of the SRS resource configured for the terminal device is 6, and six ports of the SRS are used for sending on three adjacent OFDM symbols. In this case, the network device may configure one SRS resource for the terminal device. The terminal device may send the SRS simultaneously through all the antennas of the first sub-receiver and the second sub-receiver. In addition, during sending, a 1^{st} OFDM symbol is sent through two ports that correspond to the two antennas of the first sub-receiver and that are of the SRS resource, a 2^{nd} OFDM symbol is sent through two ports that correspond to the two antennas of the second sub-receiver and that are of the SRS resource, and a 3^{rd} OFDM symbol is sent through two ports that correspond to the remaining two antennas of the first sub-receiver and that are of the SRS resource. Therefore, when receiving the 1^{st} OFDM symbol and the 3^{rd} OFDM symbol, the network device may determine that four ports corresponding to the two symbols correspond to the first sub-receiver, and when receiving the 2^{nd} OFDM symbol, determine that the two ports corresponding to the symbol correspond to the second sub-receiver.

In other words, for UE having a 6-transmit-6-receive (6T6R) capability, if six ports of one SRS resource are used for sending on three adjacent OFDM symbols, a total of four ports of a 1^{st} OFDM symbol and a 3^{rd} OFDM symbol correspond to four antennas of a 4R sub-receiver, and two ports of a 2^{nd} OFDM symbol correspond to two antennas of a 2R sub-receiver.

For another example, the antenna quantity N of the first sub-receiver is 4, the antenna quantity M of the second sub-receiver is 2, the antenna sending capability K of the terminal device is 6, and six ports of the SRS are used for sending on three adjacent OFDM symbols. In this case, the network device may configure one SRS resource for the terminal device. The terminal device may send the SRS simultaneously through all the antennas of the first sub-receiver and the second sub-receiver. In addition, during sending, a 1^{st} OFDM symbol is sent through two ports that correspond to two antennas of the first sub-receiver and that are of the SRS resource, a 2^{nd} OFDM symbol is sent through two ports that correspond to the remaining two antennas of the first sub-receiver and that are of the SRS resource, and a 3^{rd} OFDM symbol is sent through two ports that correspond to the two antennas of the second sub-receiver and that are of the SRS resource. Therefore, when receiving the 1^{st} OFDM symbol and 2^{nd} OFDM symbol, the network device may determine that four ports corresponding to the two symbols correspond to the first sub-receiver, and when receiving the 3^{rd} OFDM symbol, determine that the two ports corresponding to the symbol correspond to the second sub-receiver.

In other words, for UE having a 6-transmit-6-receive (6T6R) capability, if six ports of one SRS resource are used for sending on three adjacent OFDM symbols, a total of four ports of first two OFDM symbols correspond to four antennas of a 4R sub-receiver, and two ports of a 3^{rd} OFDM symbol correspond to two antennas of a 2R sub-receiver.

Therefore, in the foregoing manner, when the antenna sending capability of the terminal device is the same as a total antenna quantity of the sub-receivers, and the terminal sends the SRS through two or more OFDM symbols, the correspondence between the OFDM symbol and the sub-receiver can be used to distinguish between sub-receivers corresponding to ports corresponding to different OFDM symbols, thereby improving efficiency of determining a sub-receiver corresponding to each sub-receiver port.

Optionally, based on a relationship between N, M, and K, when K is less than M+N, if M=N=K+1 is further met, the network device may configure three SRS resources for the terminal device. The terminal device may further send an SRS to the network device through K antennas of the first sub-receiver, then send an SRS to the network device through an antenna other than the K antennas of the first sub-receiver and a first antenna of the second sub-receiver, and finally send an SRS to the network device through all the antennas other than the first antenna of the second sub-receiver. In addition, when the SRSs are sent, port indexes or cyclic shifts of channels of the antennas corresponding to the SRSs are different from each other. Therefore, the network device may determine that a port corresponding to an SRS received in a 1^{st} reception corresponds to the first sub-receiver, and a port corresponding to an SRS received in a 3^{rd} reception corresponds to the second sub-receiver, and determine, based on the preset correspondence between the port index or the cyclic shift and the sub-receiver, and a port index or a cyclic shift corresponding to an SRS received in a 2^{nd} reception, a sub-receiver corresponding to a port corresponding to the SRS received in the 2^{nd} reception. For example, it may be preset that a port index or a cyclic shift corresponding to the first sub-receiver is less than a port index or a cyclic shift corresponding to the second sub-receiver. Therefore, the network device may determine that a corresponding port that has a smaller port index or cyclic shift and that is used for receiving the SRS in the 2^{nd} reception corresponds to the first sub-receiver, and the other port corresponds to the second sub-receiver.

For example, the antenna quantity N of the first sub-receiver is 3, the antenna quantity M of the second sub-receiver is 3, the port quantity K of the SRS resource configured for the terminal device is 2, and it is preset that the port index or the cyclic shift corresponding to the first sub-receiver is less than the port index or the cyclic shift corresponding to the second sub-receiver. In this case, the network device may configure three SRS resources for the terminal device. The terminal device may send the SRS in the 1^{st} transmission through two ports that correspond to two antennas of the first sub-receiver and that are of a 1^{st} SRS resource, send the SRS in the 2^{nd} transmission through two ports that correspond to the remaining one antenna of the first sub-receiver and one antenna of the second sub-receiver and that are of a 2^{nd} SRS resource, and send the SRS in the 3^{rd} transmission through two ports that correspond to the remaining two antennas of the second sub-receiver and that are of a 3^{rd} SRS resource. Therefore, the network device may determine that the ports corresponding to the SRS in the 1^{st} reception and a port that has a smaller port index or cyclic shift and that is used for receiving the SRS in the 2^{nd} reception correspond to the first sub-receiver, and determine that the ports corresponding to the SRS received in the 3^{rd} reception and the other port (namely, a port whose port index or cyclic shift is larger) that is used for receiving the SRS in the 2^{nd} reception correspond to the second sub-receiver.

In other words, for UE having a 2-transmit-6-receive (2T6R) capability, all channel measurement is completed through three consecutive times of antenna switching. Two ports for the first time of antenna switching and measurement and one port for the second time of antenna switching and measurement correspond to three antennas of a 3R sub-receiver, and two ports for the third time of antenna switching and measurement and the other port for the second time of antenna switching and measurement correspond to three antennas of another 3R sub-receiver. The two ports for the second time of antenna switching and measurement are split into two groups based on the port indexes/cyclic shifts, and respectively correspond to two sub-receivers.

Therefore, in the foregoing manner, when K is less than M+N and M=N=K+1 is met, one SRS transmission can be reduced, thereby improving antenna switching and measurement efficiency.

Optionally, based on a relationship between N, M, and K, when K is less than M+N, if both S and L are further integers (N is S times K, and M is L times K), and S=L+1, the terminal device may further send an SRS to the network device in a transmissions separately through an antenna of the first sub-receiver and an antenna of the second sub-receiver, where an SRS corresponding to an odd-numbered one among the a transmissions is sent through the antenna of the first sub-receiver, an SRS corresponding to an even-numbered one among the a transmissions is sent through the antenna of the second sub-receiver, an SRS sent in each transmission corresponds to a different antenna, and a=S+L. Therefore, when receiving the SRS in an odd-numbered reception, the network device may determine that a port corresponding to the corresponding SRS corresponds to the first sub-receiver, and when receiving the SRS in an even-numbered reception, determine that a port corresponding to the corresponding SRS corresponds to the second sub-receiver.

For example, the antenna quantity N of the first sub-receiver is 4, the antenna quantity M of the second sub-receiver is 2, and the port quantity K of the SRS resource configured for the terminal device is 2. In this case, the network device may configure three SRS resources for the terminal device. The terminal device may send the SRS in the 1^{st} transmission through two ports that correspond to two antennas of the first sub-receiver and that are of a 1^{st} SRS resource, send the SRS in the 2^{nd} transmission through two ports that correspond to the two antennas of the second sub-receiver and that are of a 2^{nd} SRS resource, and send the SRS in the 3^{rd} transmission through two ports that correspond to the remaining two antennas of the first sub-receiver and that are of a 3^{rd} SRS resource. Therefore, when receiving the SRS in the 1^{st} reception and the 3^{rd} reception, the network device may determine that corresponding ports correspond to the first sub-receiver, and when receiving the SRS in the 2^{nd} reception, the network device may determine that the corresponding ports correspond to the second sub-receiver.

In other words, for UE having a 2-transmit-6-receive (2T6R) capability, all channel measurement is completed through three consecutive times of antenna switching. Two ports for the first time of antenna switching and measurement and two ports for the third time of antenna switching and measurement correspond to four antennas of a 4R sub-receiver, and two ports for the second time of antenna switching and measurement correspond to two antennas of a 2R sub-receiver.

In this way, the first sub-receiver and the second sub-receiver can alternately send the SRS, to avoid waiting of switching time for performing transmit antenna switching on a same sub-receiver, thereby improving antenna switching and measurement efficiency.

In another implementation of this application, the terminal device may have more than one antenna sending capability, and may further include two capabilities. Therefore, in another implementation, the terminal device includes a first sub-receiver and a second sub-receiver, the first sub-receiver includes N antennas, the second sub-receiver includes M antennas, and an antenna quantity indicated by the antenna sending capability includes K and H, where N, M, K, and H are positive integers, and values of K and H are different. The network device may configure, for the terminal device, two SRS resources corresponding to the antenna sending capability, for example, a first SRS resource and a second SRS resource, where a port quantity of the first SRS resource is K, and a port quantity of the second SRS resource is H.

In this case, based on a relationship between N, M, and K, when K=N and H=M, the network device may configure one first SRS resource and one second SRS resource for the terminal device. The terminal device may send the SRS to the network device in a 1^{st} reception through the first SRS resource that corresponds to all the antennas of the first sub-receiver, and send the SRS to the network device in a 2^{nd} transmission through the second SRS resource that corresponds to all the antennas of the second sub-receiver. Therefore, the network device may determine that K ports used for receiving the SRS in the 1^{st} reception correspond to the first sub-receiver, and H ports used for receiving the SRS in the 2^{nd} reception correspond to the second sub-receiver.

For example, the antenna quantity N of the first sub-receiver is 4, the antenna quantity M of the second sub-receiver is 2, the port quantity K of the first SRS resource configured for the terminal device is 4, and the port quantity H of the second SRS resource is 2. In this case, the network device may configure one first SRS resource and one second SRS resource for the terminal device. The terminal device may send the SRS in a 1^{st} transmission through four ports that correspond to the four antennas of the first sub-receiver and that are of the first SRS resource, and send the SRS in a 2^{nd} transmission through two ports that correspond to the two antennas of the second sub-receiver and that are of the second SRS resource. Therefore, when receiving the SRS in the 1^{st} reception, the network device may determine that the corresponding ports correspond to the first sub-receiver, and when receiving the SRS in the 2^{nd} reception, determine that the corresponding ports correspond to the second sub-receiver.

In other words, for UE having both a 4-transmit-6-receive (4T6R) capability and a 2-transmit-6-receive (2T6R) capability, four ports for one time of antenna switching and measurement correspond to four antennas of a 4R sub-receiver, and two ports for another time of antenna switching and measurement correspond to two antennas of a 2R sub-receiver.

In this way, when the antenna sending capability of the terminal device matches the antenna quantity of each sub-receiver, antenna switching and measurement can be quickly completed through two SRS transmissions, and the network device can conveniently determine the sub-receiver corresponding to each port.

Optionally, when K+H=N=M, the network device may configure two first SRS resources and two second SRS resources for the terminal device. The terminal device may send the SRS to the network device in a 1^{st} transmission through K antennas of the first sub-receiver, send the SRS to the network device in a 2^{nd} transmission through H antennas other than the K antennas of the first sub-receiver, send the SRS to the network device in a 3^{rd} transmission through K antennas of the second sub-receiver, and send the SRS to the network device in a 4^{th} transmission through H antennas other than the K antennas of the second sub-receiver. Therefore, the network device may determine that K ports used for receiving the SRS in the 1^{st} reception and H ports used for receiving the SRS in the 2^{nd} reception correspond to the first sub-receiver, and determining that K ports used for receiving the SRS in the 3^{rd} reception and H ports used for receiving the SRS in the 4^{th} reception correspond to the second sub-receiver.

For example, the antenna quantity N of the first sub-receiver is 3, the antenna quantity M of the second sub-receiver is 3, the port quantity K of the first SRS resource configured for the terminal device is 2, and the port quantity H of the second SRS resource is 1. In this case, the network device may configure two first SRS resources and two second SRS resources for the terminal device. The terminal device may send the SRS in a 1^{st} transmission through two ports that correspond to two antennas of the first sub-receiver and that are of a 1^{st} first SRS resource, send the SRS in a 2^{nd} transmission through one port that corresponds to the remaining one antenna of the first sub-receiver and that is of a 1^{st} second SRS resource, send the SRS in a 3^{rd} transmission through two ports that correspond to two antennas of the second sub-receiver and that are of a 2^{nd} first SRS resource, and send the SRS in a 4^{th} transmission through one port that corresponds to the remaining one antenna of the second sub-receiver and that is of a 2^{nd} second SRS resource. Therefore, the network device may determine that two ports used for receiving the SRS in the 1^{st} reception and one port used for receiving the SRS in the 2^{nd} reception correspond to the first sub-receiver, and determining that two ports used for receiving the SRS in the 3^{rd} reception and one port used for receiving the SRS in the 4^{th} reception correspond to the second sub-receiver.

In other words, for UE having both a 2-transmit-6-receive (2T6R) capability and a 1-transmit-6-receive (1T6R) capability, three ports for two adjacent times of antenna switching and measurement correspond to three antennas of one sub-receiver.

In this way, antenna switching and measurement can be conveniently and quickly performed on different sub-receivers by using the two antenna sending capabilities of the terminal device, and the network device can conveniently determine the sub-receiver corresponding to each port.

Optionally, when K-1=N=M=H+1, the network device may configure one first SRS resource and one second SRS resource for the terminal device. The terminal device may send the SRS to the network device in a 1^{st} transmission through all the antennas of the first sub-receiver and a first antenna of the second sub-receiver, and send the SRS to the network device in a 2^{nd} transmission through all the antennas other than the first antenna of the second sub-receiver. Port indexes or cyclic shifts of channels of the antennas corresponding to the SRSs are different from each other. Therefore, the network device may determine, based on a preset correspondence between a port index or a cyclic shift and a sub-receiver, and a port index or a cyclic shift corresponding to the received SRS, that K-1 ports in K ports used for receiving the SRS correspond to the first sub-receiver, and determine that H ports in H ports used for receiving the SRS and one port that is in the K ports used for receiving the SRS and that does not correspond to the first sub-receiver correspond to the second sub-receiver.

For example, the antenna quantity N of the first sub-receiver is 3, the antenna quantity M of the second sub-receiver is 3, the port quantity K of the first SRS resource configured for the terminal device is 4, the port quantity H of the second SRS resource is 2, and the preset correspondence between the port index or the cyclic shift and the sub-receiver is that a port index or a cyclic shift of each port of the first sub-receiver is less than a port index or a cyclic shift of each port of the second sub-receiver. In this case, the network device may configure one first SRS resource and one second SRS resource for the terminal device. The terminal device may send the SRS in a 1^{st} transmission through four ports that correspond to the three antennas of the first sub-receiver and one antenna of the second sub-receiver and that are of the first SRS resource, and send the SRS in a 2^{nd} transmission through two ports that correspond to the remaining two antennas of the second sub-receiver and that are of the second SRS resource. Therefore, the network device may determine, based on the preset correspondence between the port index or the cyclic shift and the sub-receiver, that a port that is used for receiving the SRS in the 1^{st} reception and corresponds to a channel of an antenna and whose corresponding port index or cyclic shift is the largest corresponds to the second sub-receiver, to determine that the remaining ports correspond to the first sub-receiver, and determine that ports used for receiving the SRS in the 2^{nd} reception correspond to the second sub-receiver.

In other words, for UE having both a 4-transmit-6-receive (4T6R) capability and a 2-transmit-6-receive (2T6R) capability, three ports for 4T6R measurement correspond to three antennas of a 3R sub-receiver, and the remaining one port and two ports for 2T6R measurement correspond to three antennas of another 3R sub-receiver.

In this way, antenna switching and measurement can be conveniently and quickly performed on different sub-receivers by using the two antenna sending capabilities of the terminal device, and the network device can conveniently determine the sub-receiver corresponding to each port.

Optionally, when K-1=N=M=H+1, if a value of N is an odd number, the network device may configure one first SRS resource and one second SRS resource for the terminal device. The terminal device may send the SRS to the network device in a 1^{st} transmission through K/2 antennas of the first sub-receiver and k/2 antennas of the second sub-receiver, and send the SRS to the network device in a 2^{nd} transmission through other H/2 antennas of the first sub-receiver and other H/2 antennas of the second sub-receiver. In addition, port indexes or cyclic shifts of channels of the antennas corresponding to the SRSs are different from each other. Therefore, the network device may determine, based on the preset correspondence between the port index or the cyclic shift and the sub-receiver, and the port index or the cyclic shift corresponding to the received SRS, that K/2 ports in K ports used for receiving the SRS correspond to the first sub-receiver and other K/2 ports correspond to the second sub-receiver, and determine that H/2 ports in H ports used for receiving the SRS correspond to the first sub-receiver and other H/2 ports correspond to the second sub-receiver.

For example, in the foregoing implementation, the SRS sent in the 1^{st} transmission may be alternatively exchanged with the SRS sent in the 2^{nd} transmission. This is not limited herein.

In an example, the antenna quantity N of the first sub-receiver is 3, the antenna quantity M of the second sub-receiver is 3, the port quantity K of the first SRS resource configured for the terminal device is 4, the port quantity H of the second SRS resource is 2, and the preset correspondence between the port index or the cyclic shift and the sub-receiver is that a port index or a cyclic shift of each port of the first sub-receiver is less than a port index or a cyclic shift of each port of the second sub-receiver. In this case, the network device may configure one first SRS resource and one second SRS resource for the terminal device. The terminal device may send the SRS in a 1^{st} transmission through four ports that correspond to two antennas of the first sub-receiver and two antennas of the second sub-receiver and that are of the first SRS resource, and send the SRS to the network device in a 2^{nd} transmission through two ports that correspond to the other antenna of the first sub-receiver and the other antenna of the second sub-receiver and that are of the second SRS resource. Therefore, when receiving the SRS in the 1^{st} reception, the network device may determine, based on the preset correspondence between the port index or the cyclic shift and the sub-receiver, that two ports with smaller port indexes or cyclic shifts in the four ports correspond to the first sub-receiver, and determine that the other two ports correspond to the second sub-receiver; and when receiving the SRS in the 2^{nd} reception, determine, based on the preset correspondence between the port index or the cyclic shift and the sub-receiver, that one port with a smaller port index or cyclic shift in the two ports corresponds to the first sub-receiver, and determine that the other port corresponds to the second sub-receiver.

In other words, for UE having both a 4-transmit-6-receive (4T6R) capability and a 2-transmit-6-receive (2T6R) capability, four ports for 4T6R measurement are split into two groups, each group corresponds to two antennas of a 3R sub-receiver, two ports for 2T6R measurement are split into two groups, and each group corresponds to the remaining one antenna of the 3R sub-receiver.

In this way, antenna switching and measurement can be conveniently and quickly performed on different sub-receivers by using the two antenna sending capabilities of the terminal device, and the network device can conveniently determine the sub-receiver corresponding to each port.

In another feasible implementation of embodiments of this application, the sub-receivers of the terminal device each may be a sub-receiver having a limited sending capability (a sending capability of a sub-receiver indicates a maximum quantity of antennas capable of being simultaneously used by the sub-receiver to send a signal). In other words, each sub-receiver has a fixed receiving and sending capability, and the receiving and sending capability of each sub-receiver cannot be changed based on a receiving and sending capability of the terminal as required. For example, each sub-receiver uses a corresponding radio frequency chip (radio frequency integrated circuit, RFIC), and the sending and receiving capability of each sub-receiver correspond to the radio frequency chip used by the sub-receiver. Therefore, when sending the SRS, the terminal device needs to consider the sending and receiving capability of each sub-receiver, and when sending the SRS through each sub-receiver, a sending capability of the corresponding sub-receiver cannot be exceeded.

For example, the following uses an example in which the terminal device includes a first sub-receiver and a second sub-receiver, the two sub-receivers have a limited sending capability, the first sub-receiver includes N antennas, and the second sub-receiver includes M antennas for description.

Optionally, an antenna connected to the first sub-receiver and an antenna included in the second sub-receiver may be separately predetermined based on antenna polarization and/or cabling, or may be determined by the terminal device based on a channel state information reference signal, or are separately determined by the network device based on the SRS. After determining the antenna connected to each sub-receiver, the terminal device or the network device may notify the peer side by using a message. When the antenna included in each sub-receiver is determined by the terminal device based on the channel state information reference signal, or determined by the network device based on the SRS, flexibility of antennas of the sub-receivers can be improved, and interference between the antennas of the sub-receivers can be reduced.

It should be noted that the antenna sending capability of the terminal device may be a sum of sending capabilities of all the sub-receivers. When the network device configures the SRS resource based on the antenna sending capability of the terminal device, the port quantity in the SRS resource is configured based on the antenna sending capability of the terminal device. When the SRS is sent through each sub-receiver, a corresponding quantity of ports in the SRS resource may be used based on the sending capability of each sub-receiver.

In an example, the port quantity of an SRS resource configured by the network device for the terminal device is A+B, a port quantity of an SRS resource applied to the first sub-receiver is A, and a port quantity of an SRS resource applied to the second sub-receiver is B, where N, M, A, and B are positive integers, N=M, A=B, N is S times A, and S is an integer. In this case, the network device may configure S SRS resources for the terminal device. The terminal device may send an SRS to the network device in S transmissions separately through A ports that correspond to A antennas of the first sub-receiver and that are of the SRS resource and B ports that correspond to B antennas of the second sub-receiver and that are of the SRS resource, where an SRS sent in each transmission corresponds to a different antenna and port, and port indexes or cyclic shifts of channels of the antennas corresponding to the SRSs are different from each other. Therefore, the network device may determine, based on the preset correspondence between the port index or the cyclic shift and the sub-receiver, and the port index or the cyclic shift corresponding to the SRS, A ports corresponding to the first sub-receiver and B ports corresponding to the second sub-receiver in ports corresponding to an SRS received in each reception.

For example, the port quantity of the SRS resource configured for the terminal device is 2, and the first sub-receiver and the second sub-receiver each apply one port; the preset correspondence between the port index or the cyclic shift and the sub-receiver is that a port index or a cyclic shift of each port of the first sub-receiver is less than a port index or a cyclic shift of each port of the second sub-receiver; and as shown in FIG. 6, the first sub-receiver uses a first radio frequency chip 601 including three antennas, and the second sub-receiver uses a second radio frequency chip 602 including three antennas. In this case, the network device may configure three SRS resources for the terminal device. The terminal device may send the SRS to the network device in three transmissions separately through one port that separately correspond to one antenna of the first sub-receiver and one antenna of the second sub-receiver and that is of the SRS resource. The SRS sent in each transmission corresponds to a different antenna, and one SRS resource is used in each transmission of the SRS. Port indexes or cyclic shifts of channels of the antennas corresponding to the SRSs are different from each other. Therefore, the network device may determine, based on the preset correspondence between the port index or the cyclic shift and the sub-receiver, and the port index or the cyclic shift corresponding to the SRS, that one port with a smaller port index or cyclic shift in ports corresponding to the SRS received in each reception corresponds to the first sub-receiver, and another port corresponds to the second sub-receiver.

In other words, the UE splits two ports for one time of antenna switching into two groups, and notifies the peer end (namely, the network device). A port with a smaller port index/cyclic shift in two ports for each time of antenna switching and measurement corresponds to one RFIC (sub-receiver), and a port with a larger port index/cyclic shift in the two ports for each time of antenna switching and measurement corresponds to another RFIC (sub-receiver).

In this way, antenna switching and measurement can be conveniently performed when two sending-capability-limited sub-receivers that have a same sending capability are used as sub-receivers, and the network device can quickly determine the sub-receiver corresponding to each port.

In another example, the SRS resource configured for the terminal device includes a first SRS resource and a second SRS resource, a port quantity of the first SRS resource is 2A, a port quantity of the second SRS resource is 2B, the first sub-receiver and the second sub-receiver each apply A ports of the first SRS resource, and the first sub-receiver and the second sub-receiver each apply B ports of the second SRS resource, where N, M, A, and B are positive integers, and N=M=A+B. In this case, the network device may configure one first SRS resource and one second SRS resource for the terminal device. The terminal device may send the SRS to the network device in a 1^{st} transmission through 2A ports that correspond to A antennas of the first sub-receiver and A antennas of the second sub-receiver and that are of the first SRS resource, and send the SRS to the network device in a 2^{nd} transmission through 2B ports that correspond to B antennas other than the A antennas of the first sub-receiver and B antennas other than the A antennas of the second sub-receiver and that are of the second SRS resource. Port indexes or cyclic shifts of channels of the antennas corresponding to the SRSs are different from each other. Therefore, the network device may separately determine, based on the preset correspondence between the port index or the cyclic shift and the sub-receiver, and the port index or the cyclic shift corresponding to the SRS, A ports corresponding to the first sub-receiver and other A ports corresponding to the second sub-receiver in the 2A ports used for receiving the SRS in the 1^{st} reception, and B ports corresponding to the first sub-receiver and other B ports corresponding to the second sub-receiver in the 2B ports used for receiving the SRS in the 2^{nd} reception.

For example, A is 2, B is 1, the preset correspondence between the port index or the cyclic shift and the sub-receiver is that a port index or a cyclic shift of each port of the first sub-receiver is less than a port index or a cyclic shift of each port of the second sub-receiver, the first sub-receiver is connected to three antennas, and the second sub-receiver is connected to three antennas. In this case, the terminal device may send the SRS to the network device in a 1^{st} transmission through four ports that correspond to two antennas of the first sub-receiver and two antennas of the second sub-receiver and that are of the first SRS resource, and send the SRS in a 2^{nd} transmission through two ports that correspond to the remaining one antenna of the first sub-receiver and the remaining one antenna of the second sub-receiver and that are of the second SRS resource. Therefore, the network device may determine, based on the preset correspondence between the port index or the cyclic shift and the sub-receiver, and the port index or the cyclic shift corresponding to the SRS, that two ports with smaller port indexes or cyclic shifts in the ports corresponding to the SRS in the 1^{st} reception correspond to the first sub-receiver, and the other two ports correspond to the second sub-receiver, and determine that one port with a smaller port index or cyclic shift in the ports corresponding to the SRS received in the 2^{nd} reception corresponds to the first sub-receiver, and the other port corresponds to the second sub-receiver.

In other words, for the UE, in 4T6R, two of four ports for the first time of antenna switching and measurement are used to measure channels of two antennas connected to the first RFIC, and the other two ports are used to measure channels of two antennas connected to the second RFIC, where ports corresponding to different RFICs are distinguished by using port indexes/cyclic shifts/combs. In 2T6R, one of two ports for the second time of antenna switching and measurement is used to measure a channel of the remaining one antenna connected to the first RFIC, and the other port is used to measure a channel of the remaining one antenna connected to the second RFIC, where ports corresponding to different RFICs are distinguished by using port indexes/cyclic shifts.

In this way, antenna switching and measurement can be conveniently performed when two sending-capability-limited sub-receivers that have a same sending capability and each include two sending capabilities are used as sub-receivers, and the network device can quickly determine the sub-receiver corresponding to each port.

In another example, the port quantity of the SRS resource configured for the terminal device is 2A, and the first sub-receiver and the second sub-receiver each apply A ports of the SRS resource, where N, M, and A are positive integers, N is greater than M, N is S times A, M is L times A, and both S and L are integers. In this case, the network device may configure S SRS resources for the terminal device. The terminal device may send the SRS to the network device in L transmissions through 2A ports that correspond to A antennas of the first sub-receiver and A antennas of the second sub-receiver and that are of the SRS resource (one SRS resource is used in each transmission), and then send the SRS to the network device in S-L transmissions through A ports that correspond to A antennas of the first sub-receiver and that are of the SRS resource (one SRS resource is used in each transmission, and the other A ports in the SRS resource may be muted). An SRS sent in each transmission corresponds to a different antenna, and port indexes or cyclic shifts of channels of the antennas corresponding to the SRSs are different from each other. Therefore, the network device may separately determine, based on the preset correspondence between the port index or the cyclic shift and the sub-receiver, and the port index or the cyclic shift corresponding to the SRS, A ports corresponding to the first sub-receiver and other A ports corresponding to second sub-receiver in 2A ports used for receiving an SRS in each of first L receptions, and determine that A ports used for receiving an SRS in each of later S-L receptions correspond to the first sub-receiver.

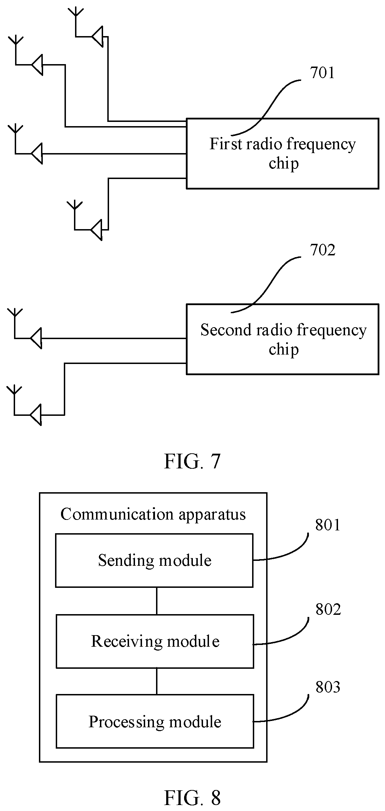

For example, A is 2, the preset correspondence between the port index or the cyclic shift and the sub-receiver is that a port index or a cyclic shift of each port of the first sub-receiver is less than a port index or a cyclic shift of each port of the second sub-receiver, and as shown in FIG. 7, the first sub-receiver uses a first radio frequency chip 701 including four antennas, and the second sub-receiver uses a second radio frequency chip 702 including two antennas. In this case, the network device may configure two SRS resources for the terminal device. The terminal device may send the SRS to the network device in one transmission through 4 ports that correspond to two antennas of the first sub-receiver and two antennas of the second sub-receiver and that are of a 1^{st} SRS resource, and then send the SRS to the network device in one transmission through two ports that correspond to two antennas of the first sub-receiver and that are of a 2^{nd} SRS resource (the other two ports may be muted). An SRS sent in each transmission corresponds to a different antenna, and port indexes or cyclic shifts of channels of the antennas corresponding to the SRSs are different from each other. Therefore, the network device may separately determine, based on the preset correspondence between the port index or the cyclic shift and the sub-receiver, and the port index or the cyclic shift corresponding to the SRS, that two ports with smaller port indexes or cyclic shifts in the four ports used for receiving the SRS in the 1^{st} reception correspond to the first sub-receiver, and the other two ports correspond to the second sub-receiver, and two ports used for receiving the SRS in the 2^{nd} reception correspond to the first sub-receiver.

In other words, for the UE, in 4T6R, two of four ports for the first time of antenna switching and measurement are used to measure channels of two antennas connected to the first RFIC, and the other two ports are used to measure channels of two antennas connected to the second RFIC, where ports corresponding to different RFICs are distinguished by using port indexes/cyclic shifts/combs. In 2T6R, two ports for the second time of antenna switching and measurement are used to measure channels of the other two antennas connected to the first RFIC.

In this way, antenna switching and measurement can be conveniently performed when two sending-capability-limited sub-receivers that have a same sending capability and for which an antenna quantity is an integer multiple of the sending capability are used as sub-receivers, and the network device can quickly determine the sub-receiver corresponding to each port.

Optionally, in this embodiment of this application, the terminal device may set both a quantity of sub-receivers and a quantity of antennas connected to each sub-receiver based on an actual requirement.

For example, an antenna set for receiving and processing one codeword may correspond to one sub-receiver. In other words, an antenna set included in each sub-receiver (namely, an antenna included in the sub-receiver) in this application corresponds to one codeword.

For example, if two codewords are processed, a sub-receiver 1 corresponding to a codeword 1 (namely, a codeword with a smaller index) and a sub-receiver 2 corresponding to a codeword 2 (namely, a codeword with a larger index) may be set.

In this way, signal receiving performance of each sub-receiver can be improved, thereby improving performance of an entire receiver system.

For another example, an antenna set for receiving and processing data streams included in one code division multiplexing group (Code Division Multiplexing group, CDM group) may correspond to one sub-receiver. In other words, an antenna set corresponding to each sub-receiver (namely, an antenna connected to the sub-receiver) in this application corresponds to one code division multiplexing group.

For example, two code division multiplexing groups are processed. In this case, a sub-receiver 1 corresponding to a code division multiplexing group 1 (namely, a code division multiplexing group with a smaller index) and a sub-receiver 2 corresponding to a code division multiplexing group 2 (namely, a code division multiplexing group with a larger index) may be set.

In this way, signal receiving performance of each sub-receiver can be improved, thereby improving performance of an entire receiver system.

Based on the foregoing implementation, the terminal device may sequentially send the SRS in one or more transmissions through antennas of different sub-receivers based on the port quantity of the SRS resource configured by the network device for the terminal device and the antenna quantity of each sub-receiver. Therefore, after receiving the SRS, the network device can determine, based on the port quantity of the SRS resource configured by the network device for the terminal device and the antenna quantity of each sub-receiver, sub-receivers corresponding to ports used for receiving different SRSs. For example, when the antenna sending capability of the terminal device is 2, and the antenna quantity corresponding to each sub-receivers is 2, the network device may configure, for the terminal device, an SRS resource whose port quantity is 2, and the terminal device may sequentially send the SRS through two antennas of each sub-receiver based on a sub-receiver sequence. Therefore, when receiving the SRS in a 1^{st} reception, the base station may determine that two ports corresponding to the SRS correspond to the first sub-receiver in the sub-receiver sequence; when the SRS is received in a 2^{nd} reception, determine that two ports corresponding to the SRS correspond to the second sub-receiver in the sub-receiver sequence; and the like. Therefore, the base station can determine, according to the method, the sub-receiver corresponding to the port (or a channel) corresponding to the SRS received by the network device, so that the base station can perform a corresponding precoding design (for example, EZF precoding), to ensure a communication capability of each split sub-receiver.

The solutions provided in embodiments of this application are mainly described from a perspective of interaction between network elements. It may be understood that, to implement the foregoing functions, the network elements such as the network device and the terminal device include corresponding hardware structures and/or software modules for performing the functions.

For example, an embodiment of this application may further provide a communication apparatus that may be used in a network device. FIG. 8 is a diagram of a structure of a communication apparatus according to an embodiment of this application.

As shown in FIG. 8, the communication apparatus may include: a sending module 801, configured to configure, for a terminal device, a sounding reference signal SRS resource whose port quantity corresponds to an antenna sending capability of the terminal device, where the antenna sending capability of the terminal device indicates a maximum quantity of antennas capable of being simultaneously used by the terminal device to send a signal; a receiving module 802, configured to receive SRSs from the terminal device, where the terminal device includes at least two sub-receivers, and the SRSs are sent by the terminal device separately through antennas of different sub-receivers; and a processing module 803, configured to determine, based on the port quantity of the SRS resource configured for the terminal device and an antenna quantity of each sub-receiver of the terminal device, a sub-receiver corresponding to a port corresponding to the SRS.

In a possible design, the terminal device includes a first sub-receiver and a second sub-receiver, the first sub-receiver includes N antennas, the second sub-receiver includes M antennas, and the port quantity of the SRS resource configured for the terminal device is K, where N, M, and K are positive integers; and the processing module 803 is specifically configured to: when K is less than M+N, determine that ports corresponding to SRSs received in first a receptions correspond to the first sub-receiver, and ports corresponding to SRSs received in later b receptions correspond to the second sub-receiver, where N is S times K, M is L times K, a=S when S is an integer, or a is a value obtained by rounding up S when S is a non-integer, and b=L when L is an integer, or b is a value obtained by rounding up L when L is a non-integer.

In a possible design, the processing module 803 is specifically configured to: when K=M+N, based on a port index, a comb, or a cyclic shift corresponding to the SRS, and based on a preset correspondence between a sub-receiver and the following: a port index, a comb, or a cyclic shift, determine the sub-receiver corresponding to the port corresponding to the SRS.

In a possible design, the processing module 803 is specifically configured to: when K=M+N, and K ports of the SRS resource are used for sending on X adjacent orthogonal frequency division multiplexing OFDM symbols, determine, based on a preset correspondence between an OFDM symbol and a sub-receiver, a sub-receiver corresponding to a port corresponding to each OFDM symbol of the SRS.

In a possible design, the processing module 803 is specifically configured to: when M=N=K+1, determine that a port corresponding to an SRS received in a 1^{st} reception corresponds to the first sub-receiver, and a port corresponding to an SRS received in a 3^{rd} reception corresponds to the second sub-receiver, and determine, based on the preset correspondence between the port index or the cyclic shift and the sub-receiver, and a port index or a cyclic shift corresponding to an SRS received in a 2^{nd} reception, a sub-receiver corresponding to a port corresponding to the SRS received in the 2^{nd} reception.

In a possible design, the terminal device includes a first sub-receiver and a second sub-receiver, the first sub-receiver includes N antennas, the second sub-receiver includes M antennas, and the port quantity of the SRS resource configured for the terminal device is K, where N, M, and K are positive integers, N is S times K, and M is L times K; and the processing module 803 is specifically configured to: when K is less than M+N, both S and L are integers, and S=L+1, determine that a port corresponding to an SRS corresponding to an odd-numbered one among a transmissions in which SRSs are received corresponds to the first sub-receiver, and a port corresponding to an SRS corresponding to an even-numbered one among the a transmissions corresponds to the second sub-receiver, where a=S+L.

In a possible design, the terminal device includes a first sub-receiver and a second sub-receiver, the first sub-receiver includes N antennas, the second sub-receiver includes M antennas, the SRS resource configured for the terminal device includes a first SRS resource and a second SRS resource, a port quantity of the first SRS resource is K, and a port quantity of the second SRS resource is H, where N, M, K, and H are positive integers, and values of K and H are different; and the processing module 803 is specifically configured to: when K=N and H=M, determine that K ports used for receiving the SRS in the 1^{st} reception correspond to the first sub-receiver, and H ports used for receiving the SRS in the 2^{nd} reception correspond to the second sub-receiver.

In a possible design, the processing module 803 is specifically configured to: when K+H=N=M, determine that K ports used for receiving an SRS in a 1^{st} reception and H ports used for receiving an SRS in a 2^{nd} reception correspond to the first sub-receiver, and determine that K ports used for receiving an SRS in a 3^{rd} reception and H ports used for receiving an SRS in a 4^{th} reception correspond to the second sub-receiver.

In a possible design, the processing module 803 is specifically configured to: when K-1=N=M=H+1, determine, based on a preset correspondence between a port index or a cyclic shift and a sub-receiver, and a port index or a cyclic shift corresponding to the received SRS, that K-1 ports in K ports used for receiving the SRS correspond to the first sub-receiver, and determine that H ports in H ports used for receiving the SRS and one port that is in the K ports used for receiving the SRS and that does not correspond to the first sub-receiver correspond to the second sub-receiver.

In a possible design, the processing module 803 is specifically configured to: when K-1=N=M=H+1, and a value of N is an odd number, determine, based on a preset correspondence between a port index or a cyclic shift and a sub-receiver, that K/2 ports in K ports used for receiving the SRS correspond to the first sub-receiver and other K/2 ports correspond to the second sub-receiver, and determine that H/2 ports in H ports used for receiving the SRS correspond to the first sub-receiver and other H/2 ports correspond to the second sub-receiver.

In a possible design, the at least two sub-receivers each have a limited sending capability, a sending capability of a sub-receiver indicates a maximum quantity of antennas capable of being simultaneously used by the sub-receiver to send a signal, the terminal device includes a first sub-receiver and a second sub-receiver, the first sub-receiver includes N antennas, the second sub-receiver includes M antennas, a port quantity of an SRS resource applied to the first sub-receiver is A, and a port quantity of an SRS resource applied to the second sub-receiver is B, where N, M, A, and B are positive integers, N=M, A=B, N is S times A, and S is an integer; and the processing module 803 is specifically configured to: determine, based on a preset correspondence between a port index or a cyclic shift and a sub-receiver, A ports corresponding to the first sub-receiver and B ports corresponding to the second sub-receiver in ports corresponding to an SRS received in each reception.

In a possible design, the at least two sub-receivers each have a limited sending capability, a sending capability of a sub-receiver indicates a maximum quantity of antennas capable of being simultaneously used by the sub-receiver to send a signal, the terminal device includes a first sub-receiver and a second sub-receiver, the first sub-receiver includes N antennas, the second sub-receiver includes M antennas, the SRS resource configured for the terminal device includes a first SRS resource and a second SRS resource, a port quantity of the first SRS resource is 2A, a port quantity of the second SRS resource is 2B, the first sub-receiver and the second sub-receiver each apply A ports of the first SRS resource, and the first sub-receiver and the second sub-receiver each apply B ports of the second SRS resource, where N, M, A, and B are positive integers, and N=M=A+B; and the processing module 803 is specifically configured to: separately determine, based on a preset correspondence between a port index or a cyclic shift and a sub-receiver, A ports corresponding to the first sub-receiver and other A ports corresponding to the second sub-receiver in 2A ports used for receiving an SRS in a 1^{st} reception, and B ports corresponding to the first sub-receiver and other B ports corresponding to the second sub-receiver in 2B ports used for receiving an SRS in a 2^{nd} reception.

In a possible design, the at least two sub-receivers each have a limited sending capability, a sending capability of a sub-receiver indicates a maximum quantity of antennas capable of being simultaneously used by the sub-receiver to send a signal, the terminal device includes a first sub-receiver and a second sub-receiver, the first sub-receiver includes N antennas, the second sub-receiver includes M antennas, the port quantity of the SRS resource configured for the terminal device is 2A, and the first sub-receiver and the second sub-receiver each apply A ports of the SRS resource, where N, M, and A are positive integers, N is greater than M, N is S times A, M is L times A, and both S and L are integers; and the processing module 803 is specifically configured to: separately determine, based on a preset correspondence between a port index or a cyclic shift and a sub-receiver, A ports corresponding to the first sub-receiver and other A ports corresponding to the second sub-receiver in 2A ports used for receiving an SRS in each of first L receptions, where A ports used for receiving an SRS in each of later S-L receptions correspond to the first sub-receiver.

In a possible design, the antenna included in the first sub-receiver and the antenna included in the second sub-receiver are separately predetermined based on antenna polarization and/or cabling.

In a possible design, the antenna included in the first sub-receiver and the antenna included in the second sub-receiver are separately determined by the terminal device based on a channel state information reference signal, or are separately determined by the network device based on the SRS.

In a possible design, an antenna set included in the sub-receiver corresponds to one codeword.

In a possible design, an antenna set included in the sub-receiver corresponds to one code division multiplexing group.

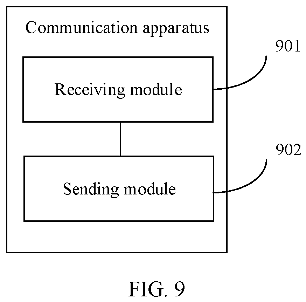

For another example, an embodiment of this application may further provide a communication apparatus that may be used in a terminal device. FIG. 9 is a diagram of a structure of another communication apparatus according to an embodiment of this application.

As shown in FIG. 9, the communication apparatus may include: a receiving module 901, configured to receive an SRS resource configured by a network device for the terminal device, where a port quantity of the SRS resource corresponds to an antenna sending capability of the terminal device, the antenna sending capability indicates a maximum quantity of antennas capable of being simultaneously used by the terminal device to send a signal, and the terminal device includes at least two sub-receivers; and a sending module 902, configured to send sound reference signals SRSs to the network device, where the SRSs are sent by the terminal device separately through antennas of different sub-receivers based on the SRS resource configured by the network device for the terminal device and an antenna quantity of each sub-receiver of the terminal device, so that the network device is able to determine, based on the port quantity of the SRS resource configured for the terminal device and the antenna quantity of each sub-receiver of the terminal device, a sub-receiver corresponding to a port corresponding to the SRS.

In a possible design, the terminal device includes a first sub-receiver and a second sub-receiver, the first sub-receiver includes N antennas, the second sub-receiver includes M antennas, and the port quantity of the SRS resource configured for the terminal device is K, where N, M, and K are positive integers; and when K is less than M+N, the sending module 902 is specifically configured to: send an SRS to the network device in a transmissions through an antenna of the first sub-receiver, where an SRS sent in each transmission corresponds to a different antenna; and send an SRS to the network device in b transmissions through an antenna of the second sub-receiver, where an SRS sent in each transmission corresponds to a different antenna, N is S times K, M is L times K, a=S when S is an integer, or a is a value obtained by rounding up S when S is a non-integer, and b=L when L is an integer, or b is a value obtained by rounding up L when L is a non-integer.

In a possible design, when K=M+N, the sending module 902 is specifically configured to: send the SRSs to the network device through all antennas of the first sub-receiver and the second sub-receiver, where port indexes, combs, or cyclic shifts of channels of the antennas corresponding to the SRSs are different from each other.

In a possible design, when K=M+N, the sending module 902 is specifically configured to: send the SRSs to the network device through all antennas of the first sub-receiver and the second sub-receiver, where K ports of the SRS resource are used for sending on X adjacent orthogonal frequency division multiplexing OFDM symbols, different OFDM symbols are sent through corresponding sub-receivers based on a preset correspondence between an OFDM symbol and a sub-receiver, and different OFDM symbols correspond to different ports.

In a possible design, when M=N=K+1, the sending module 902 is specifically configured to: send an SRS to the network device through K antennas of the first sub-receiver; send an SRS to the network device through an antenna other than the K antennas of the first sub-receiver and a first antenna of the second sub-receiver; and send an SRS to the network device through all the antennas except the first antenna of the second sub-receiver, where port indexes or cyclic shifts of channels of the antennas corresponding to the SRSs are different from each other.

In a possible design, the terminal device includes a first sub-receiver and a second sub-receiver, the first sub-receiver includes N antennas, the second sub-receiver includes M antennas, and the port quantity of the SRS resource configured for the terminal device is K, where N, M, and K are positive integers, N is S times K, and M is L times K; and when K is less than M+N, both S and L are integers, and S=L+1, the sending module 902 is specifically configured to: send an SRS to the network device in a transmissions separately through an antenna of the first sub-receiver and an antenna of the second sub-receiver, where an SRS corresponding to an odd-numbered one among the a transmissions is sent through the antenna of the first sub-receiver, an SRS corresponding to an even-numbered one among the a transmissions is sent through the antenna of the second sub-receiver, an SRS sent in each transmission corresponds to a different antenna, and a=S+L.

In a possible design, the terminal device includes a first sub-receiver and a second sub-receiver, the first sub-receiver includes N antennas, the second sub-receiver includes M antennas, the SRS resource configured for the terminal device includes a first SRS resource and a second SRS resource, a port quantity of the first SRS resource is K, and a port quantity of the second SRS resource is H, where N, M, K, and H are positive integers, and values of K and H are different; and when K=N and H=M, the sending module 902 is specifically configured to: send an SRS to the network device through all the antennas of the first sub-receiver; and send an SRS to the network device through all the antennas of the second sub-receiver.

In a possible design, when K+H=N=M, the sending module 902 is specifically configured to: send an SRS to the network device through K antennas of the first sub-receiver; send an SRS to the network device through H antennas other than the K antennas of the first sub-receiver; send an SRS to the network device through K antennas of the second sub-receiver; and send an SRS to the network device through H antennas other than the K antennas of the second sub-receiver.

In a possible design, when K-1=N=M=H+1, the sending module 902 is specifically configured to: send an SRS to the network device through all the antennas of the first sub-receiver and a first antenna of the second sub-receiver; and send an SRS to the network device through all the antennas except the first antenna of the second sub-receiver, where port indexes or cyclic shifts of channels of the antennas corresponding to the SRSs are different from each other.

In a possible design, when K-1=N=M=H+1, and a value of N is an odd number, the sending module 902 is specifically configured to: send an SRS to the network device through K/2 antennas of the first sub-receiver and k/2 antennas of the second sub-receiver; and send an SRS to the network device through other H/2 antennas of the first sub-receiver and other H/2 antennas of the second sub-receiver, where port indexes or cyclic shifts of channels of the antennas corresponding to the SRSs are different from each other.

In a possible design, the at least two sub-receivers each have a limited antenna sending capability, the terminal device includes a first sub-receiver and a second sub-receiver, the first sub-receiver includes N antennas, the second sub-receiver includes M antennas, a port quantity of an SRS resource applied to the first sub-receiver is A, and a port quantity of an SRS resource applied to the second sub-receiver is B, where N, M, A, and B are positive integers, N=M, A=B, N is S times A, and S is an integer; and the sending module 902 is specifically configured to: send an SRS to the network device in S transmissions separately through A antennas of the first sub-receiver and B antennas of the second sub-receiver, where an SRS sent in each transmission corresponds to a different antenna, and port indexes or cyclic shifts of channels of the antennas corresponding to the SRSs are different from each other.

In a possible design, the at least two sub-receivers each have a limited antenna sending capability, the terminal device includes a first sub-receiver and a second sub-receiver, the first sub-receiver includes N antennas, the second sub-receiver includes M antennas, the SRS resource configured for the terminal device includes a first SRS resource and a second SRS resource, a port quantity of the first SRS resource is 2A, a port quantity of the second SRS resource is 2B, the first sub-receiver and the second sub-receiver each apply A ports of the first SRS resource, and the first sub-receiver and the second sub-receiver each apply B ports of the second SRS resource, where N, M, A, and B are positive integers, and N=M=A+B; and the sending module 902 is specifically configured to: send an SRS to the network device through A antennas of the first sub-receiver and A antennas of the second sub-receiver; and send an SRS to the network device through B antennas other than the A antennas of the first sub-receiver and B antennas other than the A antennas of the second sub-receiver, where port indexes or cyclic shifts of channels of the antennas corresponding to the SRSs are different from each other.

In a possible design, the at least two sub-receivers each have a limited antenna sending capability, the terminal device includes a first sub-receiver and a second sub-receiver, the first sub-receiver includes N antennas, the second sub-receiver includes M antennas, the port quantity of the SRS resource configured for the terminal device is 2A, and the first sub-receiver and the second sub-receiver each apply A ports of the SRS resource, where N, M, and A are positive integers, N is greater than M, N is S times A, M is L times A, and both S and L are integers; and the sending module 902 is specifically configured to: send an SRS to the network device in L transmissions through A antennas of the first sub-receiver and A antennas of the second sub-receiver; and send an SRS to the network device in S-L transmissions through the A antennas of the first sub-receiver, where an SRS sent in each transmission corresponds to a different antenna, and port indexes or cyclic shifts of channels of the antennas corresponding to the SRSs are different from each other.

In a possible design, the antenna included in the first sub-receiver and the antenna included in the second sub-receiver are separately predetermined based on antenna polarization and/or cabling.

In a possible design, the antenna included in the first sub-receiver and the antenna included in the second sub-receiver are separately determined by the terminal device based on a channel state information reference signal, or are separately determined by the network device based on the SRS.

In a possible design, an antenna set included in the sub-receiver corresponds to one codeword.

In a possible design, an antenna set included in the sub-receiver corresponds to one code division multiplexing group.

It should be understood that division of the foregoing apparatus into units (modules) is merely logical function division. During actual implementation, all or some of the units may be integrated into one physical entity or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware.

For example, each unit may be a separately disposed processing element, or may be integrated into a chip of the apparatus for implementation. Alternatively, each unit may be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing ability. In an implementation process, the steps in the foregoing methods or the foregoing units may be implemented by using a hardware integrated logic circuit in a processor element, or may be implemented in a form of software invoked by the processing element.

In an example, a unit in any one of the foregoing apparatuses may be one or more integrated circuits configured to implement the foregoing methods, for example, one or more ASICs, one or more DSPs, one or more FPGAs, or a combination of at least two of the integrated circuit forms.

For another example, when a unit in the apparatus may be implemented in a manner in which a processing element schedules a program, the processing element may be a general-purpose processor, such as a CPU or another processor that can invoke a program. For another example, the units may be integrated and implemented in a form of a system-on-a-chip (system-on-a-chip, SOC).

The foregoing receiving unit is an interface circuit or an input circuit of the apparatus, and is configured to receive a signal from another apparatus. For example, when the apparatus is implemented in a form of a chip, the receiving unit is an interface circuit or an input circuit used by the chip to receive a signal from another chip or apparatus. When the communication apparatus includes a sending unit, the sending unit is an interface circuit or an output circuit of the apparatus, and is configured to send a signal to another apparatus. For example, when the apparatus is implemented in a form of a chip, the sending unit is an interface circuit or an output circuit used by the chip to send a signal to another chip or apparatus.

For example, an embodiment of this application may further provide a communication apparatus, which may be used in the foregoing network device or terminal device. The communication apparatus may include a processor and an interface circuit. There may be one or more processors.

When the communication apparatus is used in the network device, the processor is configured to communicate with another apparatus through the interface circuit, and perform the steps performed by the network device in the foregoing methods.

When the communication apparatus is used in the terminal device, the processor is configured to communicate with another apparatus through the interface circuit, and perform the steps performed by the terminal device in the foregoing methods.

In an implementation, the units of the network device or the terminal device that respectively implement the corresponding steps in the foregoing method may be implemented by scheduling a program by a processing element. For example, the apparatus used in the network device or the terminal device may include the processing element and a storage element. The processing element invokes a program stored in the storage element, to perform the method performed by the corresponding network device or terminal device in the foregoing method embodiments. The storage element may be a storage element located on a same chip as the processing element, that is, an on-chip storage element.

In another implementation, a program used to perform the method performed by the network device or the terminal device in the foregoing method may be in a storage element located on a chip different from that of the processing element, that is, an off-chip storage element. In this case, the processing element invokes or loads the program from the off-chip storage element to the on-chip storage element, to invoke and perform the method performed by the corresponding network device or terminal device in the foregoing method embodiments.

For example, an embodiment of this application may further provide a communication apparatus. The communication apparatus may include a memory and a processor. The processor is configured to execute computer instructions stored in the memory. When the computer instructions are executed, the apparatus is enabled to perform the method performed by the network device or the terminal device. The memory may be located inside or outside the communication apparatus. In addition, there are one or more processors.

In another implementation, units of the network device or the terminal device that implement the steps in the foregoing method may be configured as one or more processing elements. These processing elements may be disposed on a corresponding network device or first terminal device. The processing element herein may be an integrated circuit. For example: One or more ASICs, one or more DSPs, one or more FPGAs, or a combination of these types of integrated circuits. These integrated circuits may be integrated together to form a chip.

The units of the network device or the terminal device that implement the steps in the foregoing method may be integrated together, and implemented in a form of an SOC. The SOC chip is configured to implement the corresponding method. At least one processing element and a storage element may be integrated into the chip, and the processing element invokes a program stored in the storage element to implement a corresponding method. Alternatively, at least one integrated circuit may be integrated into the chip, to implement a corresponding method. Alternatively, with reference to the foregoing implementations, functions of some units are implemented by invoking a program by a processing element, and functions of some units are implemented by using an integrated circuit.

As described above, the processing element herein may be a general-purpose processor, for example, a CPU, or may be one or more integrated circuits configured to implement the foregoing methods, for example, one or more ASICs, one or more microprocessors DSPs, one or more FPGAs, or a combination of at least two of the integrated circuits.

The storage element may be one memory, or may be a general term of a plurality of storage elements.

For example, an embodiment of this application further provides a chip system. The chip system may be used in the foregoing network device or terminal device. The chip system includes one or more interface circuits and one or more processors. The interface circuit and the processor are interconnected through a line. The processor receives and executes computer instructions from a memory of the electronic device through the interface circuit, to implement the method performed by the corresponding network device or terminal device in the foregoing method embodiments.

Based on the descriptions of the implementations, a person skilled in the art may clearly understand that for the purpose of convenient and brief descriptions, division into the foregoing functional modules is merely used as an example for descriptions. During actual application, the functions may be allocated to different functional modules for implementation based on a requirement. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or unit division is merely logical function division and may be other division in an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may be one or more physical units, may be located in one place, or may be distributed on different places. Some or all of the units may be selected based on an actual requirement to achieve an objective of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product, for example, a program. The software product is stored in a program product, for example, a computer-readable storage medium, and includes several instructions for instructing a device (which may be a single chip microcomputer, a chip, or the like) or a processor (processor) to perform all or some of the steps in the method in embodiments of this application. The foregoing storage medium includes any medium that can store program code, such as a USB flash drive, a removable hard disk, a ROM, a RAM, a magnetic disk, or an optical disc.

For example, an embodiment of this application may further provide a computer-readable storage medium. The computer-readable storage medium stores computer instructions. When the computer instructions are run on a network device or a chip built in the network device, the network device may be enabled to perform the method performed by the network device in the foregoing embodiments.

Alternatively, when the computer instructions are run in a terminal device or a chip built in the terminal device, the terminal device is enabled to perform the method performed by the terminal device in the foregoing embodiments.

The foregoing descriptions are merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, applied to a network device, wherein the method comprises:
configuring, for a terminal device, a sounding reference signal SRS resource whose port quantity corresponds to an antenna sending capability of the terminal device, wherein the antenna sending capability of the terminal device indicates a maximum quantity of antennas capable of being simultaneously used by the terminal device to send a signal;
receiving SRSs from the terminal device, wherein the terminal device comprises at least two sub-receivers, and the SRSs are sent by the terminal device separately through antennas of different sub-receivers based on the SRS resource; and
determining, based on the port quantity of the SRS resource configured for the terminal device and an antenna quantity of each sub-receiver of the terminal device, a sub-receiver corresponding to a port corresponding to the SRS.

2. The method according to claim 1, wherein the terminal device comprises a first sub-receiver and a second sub-receiver, the first sub-receiver comprises N antennas, the second sub-receiver comprises M antennas, and the port quantity of the SRS resource configured for the terminal device is K, wherein N, M, and K are positive integers; and
the determining, based on the port quantity of the SRS resource configured for the terminal device and the antenna quantity of each sub-receiver of the terminal device, the sub-receiver corresponding to the port corresponding to the SRS comprises:
when K is less than M+N, determining that ports corresponding to SRSs received in first a receptions correspond to the first sub-receiver, and ports corresponding to SRSs received in later b receptions correspond to the second sub-receiver, wherein N is S times K, M is L times K, a=S when S is an integer, or a is a value obtained by rounding up S when S is a non-integer, and b=L when L is an integer, or b is a value obtained by rounding up L when L is a non-integer.

3. The method according to claim 2, wherein the determining, based on the port quantity of the SRS resource configured for the terminal device and the antenna quantity of each sub-receiver of the terminal device, the sub-receiver corresponding to the port corresponding to the SRS further comprises:
when K=M+N, based on a port index, a comb, or a cyclic shift corresponding to the SRS, and based on a preset correspondence between a sub-receiver and the following: a port index, a comb, or a cyclic shift, determining the sub-receiver corresponding to the port corresponding to the SRS.

4. The method according to claim 2, wherein the determining, based on the port quantity of the SRS resource configured for the terminal device and the antenna quantity of each sub-receiver of the terminal device, the sub-receiver corresponding to the port corresponding to the SRS further comprises:
when K=M+N, and K ports of the SRS resource are used for sending on X adjacent orthogonal frequency division multiplexing OFDM symbols, determining, based on a preset correspondence between an OFDM symbol and a sub-receiver, a sub-receiver corresponding to a port corresponding to each OFDM symbol of the SRS.

5. The method according to any one of claims 2 to 4, wherein the determining, based on the port quantity of the SRS resource configured for the terminal device and the antenna quantity of each sub-receiver of the terminal device, the sub-receiver corresponding to the port corresponding to the SRS further comprises:
when M=N=K+1, determining that a port corresponding to the SRS received in a 1^{st} reception corresponds to the first sub-receiver, and a port corresponding to the SRS received in a 3^{rd} reception corresponds to the second sub-receiver, and determining, based on the preset correspondence between the port index or the cyclic shift and the sub-receiver, and a port index or a cyclic shift corresponding to the SRS received in a 2^{nd} reception, a sub-receiver corresponding to a port corresponding to the SRS received in the 2^{nd} reception.

6. The method according to claim 1, wherein the terminal device comprises a first sub-receiver and a second sub-receiver, the first sub-receiver comprises N antennas, the second sub-receiver comprises M antennas, and the port quantity of the SRS resource configured for the terminal device is K, wherein N, M, and K are positive integers, N is S times K, and M is L times K; and
the determining, based on the port quantity of the SRS resource configured for the terminal device and the antenna quantity of each sub-receiver of the terminal device, the sub-receiver corresponding to the port corresponding to the SRS comprises:
when K is less than M+N, both S and L are integers, and S=L+1, determining that a port corresponding to an SRS corresponding to an odd-numbered one among a receptions in which SRSs are received corresponds to the first sub-receiver, and a port corresponding to an SRS corresponding to an even-numbered one among the a receptions corresponds to the second sub-receiver, wherein a=S+L.

7. The method according to claim 1, wherein the terminal device comprises a first sub-receiver and a second sub-receiver, the first sub-receiver comprises N antennas, the second sub-receiver comprises M antennas, the SRS resource configured for the terminal device comprises a first SRS resource and a second SRS resource, a port quantity of the first SRS resource is K, and a port quantity of the second SRS resource is H, wherein N, M, K, and H are positive integers, and values of K and H are different; and
the determining, based on the port quantity of the SRS resource configured for the terminal device and the antenna quantity of each sub-receiver of the terminal device, the sub-receiver corresponding to the port corresponding to the SRS comprises:
when K=N and H=M, determining that K ports used for receiving an SRS in a 1^{st} reception correspond to the first sub-receiver, and H ports used for receiving an SRS in a 2^{nd} reception correspond to the second sub-receiver.

8. The method according to claim 7, wherein the determining, based on the port quantity of the SRS resource configured for the terminal device and the antenna quantity of each sub-receiver of the terminal device, the sub-receiver corresponding to the port corresponding to the SRS further comprises:
when K+H=N=M, determining that K ports used for receiving an SRS in a 1^{st} reception and H ports used for receiving an SRS in a 2^{nd} reception correspond to the first sub-receiver, and determining that K ports used for receiving an SRS in a 3^{rd} reception and H ports used for receiving an SRS in a 4^{th} reception correspond to the second sub-receiver.

9. The method according to claim 7 or 8, wherein the determining, based on the port quantity of the SRS resource configured for the terminal device and the antenna quantity of each sub-receiver of the terminal device, the sub-receiver corresponding to the port corresponding to the SRS further comprises:
when K-1=N=M=H+1, determining, based on a preset correspondence between a port index or a cyclic shift and a sub-receiver, and a port index or a cyclic shift corresponding to the received SRS, that K-1 ports in K ports used for receiving the SRS correspond to the first sub-receiver, and determining that H ports in H ports used for receiving the SRS and one port that is in the K ports used for receiving the SRS and that does not correspond to the first sub-receiver correspond to the second sub-receiver.

10. The method according to claim 7 or 8, wherein the determining, based on the port quantity of the SRS resource configured for the terminal device and the antenna quantity of each sub-receiver of the terminal device, the sub-receiver corresponding to the port corresponding to the SRS further comprises:
when K-1=N=M=H+1, and a value of N is an odd number, determining, based on a preset correspondence between a port index or a cyclic shift and a sub-receiver, that K/2 ports in K ports used for receiving the SRS correspond to the first sub-receiver and other K/2 ports correspond to the second sub-receiver, and determining that H/2 ports in H ports used for receiving the SRS correspond to the first sub-receiver and other H/2 ports correspond to the second sub-receiver.

11. The method according to claim 1, wherein the at least two sub-receivers each have a limited sending capability, a sending capability of a sub-receiver indicates a maximum quantity of antennas capable of being simultaneously used by the sub-receiver to send a signal, the terminal device comprises a first sub-receiver and a second sub-receiver, the first sub-receiver comprises N antennas, the second sub-receiver comprises M antennas, a port quantity of an SRS resource applied to the first sub-receiver is A, and a port quantity of an SRS resource applied to the second sub-receiver is B, wherein N, M, A, and B are positive integers, N=M, A=B, N is S times A, and S is an integer; and
the determining, based on the port quantity of the SRS resource configured for the terminal device and the antenna quantity of each sub-receiver of the terminal device, the sub-receiver corresponding to the port corresponding to the SRS comprises:
determining, based on a preset correspondence between a port index or a cyclic shift and a sub-receiver, A ports corresponding to the first sub-receiver and B ports corresponding to the second sub-receiver in ports corresponding to an SRS received in each reception.

12. The method according to claim 1, wherein the at least two sub-receivers each have a limited sending capability, a sending capability of a sub-receiver indicates a maximum quantity of antennas capable of being simultaneously used by the sub-receiver to send a signal, the terminal device comprises a first sub-receiver and a second sub-receiver, the first sub-receiver comprises N antennas, the second sub-receiver comprises M antennas, the SRS resource configured for the terminal device comprises a first SRS resource and a second SRS resource, a port quantity of the first SRS resource is 2A, a port quantity of the second SRS resource is 2B, the first sub-receiver and the second sub-receiver each apply A ports of the first SRS resource, and the first sub-receiver and the second sub-receiver each apply B ports of the second SRS resource, wherein N, M, A, and B are positive integers, and N=M=A+B; and
the determining, based on the port quantity of the SRS resource configured for the terminal device and the antenna quantity of each sub-receiver of the terminal device, the sub-receiver corresponding to the port corresponding to the SRS comprises:
separately determining, based on a preset correspondence between a port index or a cyclic shift and a sub-receiver, A ports corresponding to the first sub-receiver and other A ports corresponding to the second sub-receiver in 2A ports used for receiving an SRS in a 1^{st} reception, and B ports corresponding to the first sub-receiver and other B ports corresponding to the second sub-receiver in 2B ports used for receiving an SRS in a 2^{nd} reception.

13. The method according to claim 1, wherein the at least two sub-receivers each have a limited sending capability, a sending capability of a sub-receiver indicates a maximum quantity of antennas capable of being simultaneously used by the sub-receiver to send a signal, the terminal device comprises a first sub-receiver and a second sub-receiver, the first sub-receiver comprises N antennas, the second sub-receiver comprises M antennas, the port quantity of the SRS resource configured for the terminal device is 2A, and the first sub-receiver and the second sub-receiver each apply A ports of the SRS resource, wherein N, M, and A are positive integers, N is greater than M, N is S times A, M is L times A, and both S and L are integers; and
the determining, based on the port quantity of the SRS resource configured for the terminal device and the antenna quantity of each sub-receiver of the terminal device, the sub-receiver corresponding to the port corresponding to the SRS comprises:
separately determining, based on a preset correspondence between a port index or a cyclic shift and a sub-receiver, A ports corresponding to the first sub-receiver and other A ports corresponding to the second sub-receiver in 2A ports used for receiving an SRS in each of first L receptions, wherein A ports used for receiving an SRS in each of later S-L receptions correspond to the first sub-receiver.

14. The method according to any one of claims 11 to 13, wherein the antenna comprised in the first sub-receiver and the antenna comprised in the second sub-receiver are separately predetermined based on antenna polarization and/or cabling.

15. The method according to any one of claims 11 to 13, wherein the antenna comprised in the first sub-receiver and the antenna comprised in the second sub-receiver are separately determined by the terminal device based on a channel state information reference signal, or are separately determined by the network device based on the SRS.

16. The method according to claim 1, wherein an antenna set comprised in each sub-receiver corresponds to one codeword.

17. The method according to claim 1, wherein an antenna set comprised in each sub-receiver corresponds to one code division multiplexing group.

18. A communication method, applied to a terminal device, wherein the method comprises:
receiving a sounding reference signal SRS resource configured by a network device for the terminal device, wherein a port quantity of the SRS resource corresponds to an antenna sending capability of the terminal device, the antenna sending capability indicates a maximum quantity of antennas capable of being simultaneously used by the terminal device to send a signal, and the terminal device comprises at least two sub-receivers; and
sending SRSs to the network device, wherein the SRSs are sent by the terminal device separately through antennas of different sub-receivers based on the SRS resource configured by the network device for the terminal device and an antenna quantity of each sub-receiver of the terminal device, so that the network device is able to determine, based on the port quantity of the SRS resource configured for the terminal device and the antenna quantity of each sub-receiver of the terminal device, a sub-receiver corresponding to a port corresponding to the SRS.

19. The method according to claim 18, wherein the terminal device comprises a first sub-receiver and a second sub-receiver, the first sub-receiver comprises N antennas, the second sub-receiver comprises M antennas, and the port quantity of the SRS resource configured for the terminal device is K, wherein N, M, and K are positive integers; and
when K is less than M+N, the sending the SRSs to the network device comprises:
sending an SRS to the network device in a transmissions through an antenna of the first sub-receiver, wherein an SRS sent in each transmission corresponds to a different antenna; and
sending an SRS to the network device in b transmissions through an antenna of the second sub-receiver, wherein an SRS sent in each transmission corresponds to a different antenna, wherein
N is S times K, M is L times K, a=S when S is an integer, or a is a value obtained by rounding up S when S is a non-integer, and b=L when L is an integer, or b is a value obtained by rounding up L when L is a non-integer.

20. The method according to claim 19, wherein when K=M+N, the sending the SRSs to the network device comprises:
sending the SRSs to the network device through all antennas of the first sub-receiver and the second sub-receiver, wherein port indexes, combs, or cyclic shifts of channels of the antennas corresponding to the SRSs are different from each other.

21. The method according to claim 19, wherein when K=M+N, the sending the SRSs to the network device comprises:
sending the SRSs to the network device through all antennas of the first sub-receiver and the second sub-receiver, wherein K ports of the SRS resource are used for sending on X adjacent orthogonal frequency division multiplexing OFDM symbols, different OFDM symbols are sent through corresponding sub-receivers based on a preset correspondence between an OFDM symbol and a sub-receiver, and different OFDM symbols correspond to different ports.

22. The method according to any one of claims 19 to 21, wherein when M=N=K+1, the sending the SRSs to the network device comprises:
sending an SRS to the network device through K antennas of the first sub-receiver;
sending an SRS to the network device through an antenna other than the K antennas of the first sub-receiver and a first antenna of the second sub-receiver; and
sending an SRS to the network device through all the antennas except the first antenna of the second sub-receiver, wherein
port indexes or cyclic shifts of channels of the antennas corresponding to the SRSs are different from each other.

23. The method according to claim 18, wherein the terminal device comprises a first sub-receiver and a second sub-receiver, the first sub-receiver comprises N antennas, the second sub-receiver comprises M antennas, and the port quantity of the SRS resource configured for the terminal device is K, wherein N, M, and K are positive integers, N is S times K, and M is L times K; and
when K is less than M+N, both S and L are integers, and S=L+1, the sending the SRSs to the network device comprises:
sending an SRS to the network device in a transmissions separately through an antenna of the first sub-receiver and an antenna of the second sub-receiver, wherein an SRS corresponding to an odd-numbered one among the a transmissions is sent through the antenna of the first sub-receiver, an SRS corresponding to an even-numbered one among the a transmissions is sent through the antenna of the second sub-receiver, an SRS sent in each transmission corresponds to a different antenna, and a=S+L.

24. The method according to claim 18, wherein the terminal device comprises a first sub-receiver and a second sub-receiver, the first sub-receiver comprises N antennas, the second sub-receiver comprises M antennas, the SRS resource configured for the terminal device comprises a first SRS resource and a second SRS resource, a port quantity of the first SRS resource is K, and a port quantity of the second SRS resource is H, wherein N, M, K, and H are positive integers, and values of K and H are different; and
when K=N and H=M, the sending the SRSs to the network device comprises:
sending an SRS to the network device through all the antennas of the first sub-receiver; and
sending an SRS to the network device through all the antennas of the second sub-receiver.

25. The method according to claim 24, wherein when K+H=N=M, the sending the SRSs to the network device comprises:
sending an SRS to the network device through K antennas of the first sub-receiver;
sending an SRS to the network device through H antennas other than the K antennas of the first sub-receiver;
sending an SRS to the network device through K antennas of the second sub-receiver; and
sending an SRS to the network device through H antennas other than the K antennas of the second sub-receiver.

26. The method according to claim 24 or 25, wherein when K-1=N=M=H+1, the sending the SRSs to the network device comprises:
sending an SRS to the network device through all the antennas of the first sub-receiver and a first antenna of the second sub-receiver; and
sending an SRS to the network device through all the antennas except the first antenna of the second sub-receiver, wherein
port indexes or cyclic shifts of channels of the antennas corresponding to the SRSs are different from each other.

27. The method according to claim 24 or 25, wherein when K-1=N=M=H+1, and a value of N is an odd number, the sending the SRSs to the network device comprises:
sending an SRS to the network device through K/2 antennas of the first sub-receiver and K/2 antennas of the second sub-receiver; and
sending an SRS to the network device through other H/2 antennas of the first sub-receiver and other H/2 antennas of the second sub-receiver, wherein
port indexes or cyclic shifts of channels of the antennas corresponding to the SRSs are different from each other.

28. The method according to claim 18, wherein the at least two sub-receivers each have a limited antenna sending capability, the terminal device comprises a first sub-receiver and a second sub-receiver, the first sub-receiver comprises N antennas, the second sub-receiver comprises M antennas, a port quantity of an SRS resource applied to the first sub-receiver is A, and a port quantity of an SRS resource applied to the second sub-receiver is B, wherein N, M, A, and B are positive integers, N=M, A=B, N is S times A, and S is an integer; and
the sending the SRSs to the network device comprises:
sending an SRS to the network device in S transmissions separately through A antennas of the first sub-receiver and B antennas of the second sub-receiver, wherein an SRS sent in each transmission corresponds to a different antenna, and port indexes or cyclic shifts of channels of the antennas corresponding to the SRSs are different from each other.

29. The method according to claim 18, wherein the at least two sub-receivers each have a limited antenna sending capability, the terminal device comprises a first sub-receiver and a second sub-receiver, the first sub-receiver comprises N antennas, the second sub-receiver comprises M antennas, the SRS resource configured for the terminal device comprises a first SRS resource and a second SRS resource, a port quantity of the first SRS resource is 2A, a port quantity of the second SRS resource is 2B, the first sub-receiver and the second sub-receiver each apply A ports of the first SRS resource, and the first sub-receiver and the second sub-receiver each apply B ports of the second SRS resource, wherein N, M, A, and B are positive integers, and N=M=A+B; and
the sending the SRSs to the network device comprises:
sending an SRS to the network device through A antennas of the first sub-receiver and A antennas of the second sub-receiver; and
sending an SRS to the network device through B antennas other than the A antennas of the first sub-receiver and B antennas other than the A antennas of the second sub-receiver, wherein
port indexes or cyclic shifts of channels of the antennas corresponding to the SRSs are different from each other.

30. The method according to claim 18, wherein the at least two sub-receivers each have a limited antenna sending capability, the terminal device comprises a first sub-receiver and a second sub-receiver, the first sub-receiver comprises N antennas, the second sub-receiver comprises M antennas, the port quantity of the SRS resource configured for the terminal device is 2A, and the first sub-receiver and the second sub-receiver each apply A ports of the SRS resource, wherein N, M, and A are positive integers, N is greater than M, N is S times A, M is L times A, and both S and L are integers; and
the sending the SRSs to the network device comprises:
sending an SRS to the network device in L transmissions through A antennas of the first sub-receiver and A antennas of the second sub-receiver; and
sending an SRS to the network device in S-L transmissions through the A antennas of the first sub-receiver, wherein
an SRS sent in each transmission corresponds to a different antenna, and port indexes or cyclic shifts of channels of the antennas corresponding to the SRSs are different from each other.

31. The method according to any one of claims 28 to 30, wherein the antenna comprised in the first sub-receiver and the antenna comprised in the second sub-receiver are separately predetermined based on antenna polarization and/or cabling.

32. The method according to any one of claims 28 to 30, wherein the antenna comprised in the first sub-receiver and the antenna comprised in the second sub-receiver are separately determined by the terminal device based on a channel state information reference signal, or are separately determined by the network device based on the SRS.

33. The method according to claim 18, wherein an antenna set comprised in the sub-receiver corresponds to one codeword.

34. The method according to claim 18, wherein an antenna set comprised in the sub-receiver corresponds to one code division multiplexing group.

35. A communication apparatus, wherein the apparatus comprises:
a sending module, adapted to configure, for a terminal device, a sounding reference signal SRS resource whose port quantity corresponds to an antenna sending capability of the terminal device, wherein the antenna sending capability of the terminal device indicates a maximum quantity of antennas capable of being simultaneously used by the terminal device to send a signal;
a receiving module, configured to receive SRSs from the terminal device, wherein the terminal device comprises at least two sub-receivers, and the SRSs are sent by the terminal device separately through antennas of different sub-receivers based on the SRS resource; and
a processing module, configured to determine, based on the port quantity of the SRS resource configured for the terminal device and an antenna quantity of each sub-receiver of the terminal device, a sub-receiver corresponding to a port corresponding to the SRS.

36. The apparatus according to claim 35, wherein the terminal device comprises a first sub-receiver and a second sub-receiver, the first sub-receiver comprises N antennas, the second sub-receiver comprises M antennas, and the port quantity of the SRS resource configured for the terminal device is K, wherein N, M, and K are positive integers; and
the processing module is specifically configured to: when K is less than M+N, determine that ports corresponding to SRSs received in first a receptions correspond to the first sub-receiver, and ports corresponding to SRSs received in later b receptions correspond to the second sub-receiver, wherein N is S times K, M is L times K, a=S when S is an integer, or a is a value obtained by rounding up S when S is a non-integer, and b=L when L is an integer, or b is a value obtained by rounding up L when L is a non-integer.

37. The apparatus according to claim 36, wherein the processing module is specifically configured to: when K=M+N, based on a port index, a comb, or a cyclic shift corresponding to the SRS, and based on a preset correspondence between a sub-receiver and the following: a port index, a comb, or a cyclic shift, determine the sub-receiver corresponding to the port corresponding to the SRS.

38. The apparatus according to claim 36, wherein the processing module is specifically configured to: when K=M+N, and K ports of the SRS resource are used for sending on X adjacent orthogonal frequency division multiplexing OFDM symbols, determine, based on a preset correspondence between an OFDM symbol and a sub-receiver, a sub-receiver corresponding to a port corresponding to each OFDM symbol of the SRS.

39. The apparatus according to any one of claims 36 to 38, wherein the processing module is specifically configured to: when M=N=K+1, determine that a port corresponding to the SRS received in a 1^{st} reception corresponds to the first sub-receiver, and a port corresponding to the SRS received in a 3^{rd} reception corresponds to the second sub-receiver, and determine, based on the preset correspondence between the port index or the cyclic shift and the sub-receiver, and a port index or a cyclic shift corresponding to the SRS received in a 2^{nd} reception, a sub-receiver corresponding to a port corresponding to the SRS received in the 2^{nd} reception.

40. The apparatus according to claim 35, wherein the terminal device comprises a first sub-receiver and a second sub-receiver, the first sub-receiver comprises N antennas, the second sub-receiver comprises M antennas, and the port quantity of the SRS resource configured for the terminal device is K, wherein N, M, and K are positive integers, N is S times K, and M is L times K; and
the processing module is specifically configured to: when K is less than M+N, both S and L are integers, and S=L+1, determine that a port corresponding to an SRS corresponding to an odd-numbered one among a receptions in which SRSs are received corresponds to the first sub-receiver, and a port corresponding to an SRS corresponding to an even-numbered one among the a receptions corresponds to the second sub-receiver, wherein a=S+L.

41. The apparatus according to claim 35, wherein the terminal device comprises a first sub-receiver and a second sub-receiver, the first sub-receiver comprises N antennas, the second sub-receiver comprises M antennas, the SRS resource configured for the terminal device comprises a first SRS resource and a second SRS resource, a port quantity of the first SRS resource is K, and a port quantity of the second SRS resource is H, wherein N, M, K, and H are positive integers, and values of K and H are different; and
the processing module is specifically configured to: when K=N and H=M, determine that K ports used for receiving an SRS in a 1^{st} reception correspond to the first sub-receiver, and H ports used for receiving an SRS in a 2^{nd} reception correspond to the second sub-receiver.

42. The apparatus according to claim 41, wherein the processing module is specifically configured to: when K+H=N=M, determine that K ports used for receiving an SRS in a 1^{st} reception and H ports used for receiving an SRS in a 2^{nd} reception correspond to the first sub-receiver, and determine that K ports used for receiving an SRS in a 3^{rd} reception and H ports used for receiving an SRS in a 4^{th} reception correspond to the second sub-receiver.

43. The apparatus according to claim 41 or 42, wherein the processing module is specifically configured to: when K-1=N=M=H+1, determine, based on a preset correspondence between a port index or a cyclic shift and a sub-receiver, and a port index or a cyclic shift corresponding to the received SRS, that K-1 ports in K ports used for receiving the SRS correspond to the first sub-receiver, and determine that H ports in H ports used for receiving the SRS and one port that is in the K ports used for receiving the SRS and that does not correspond to the first sub-receiver correspond to the second sub-receiver.

44. The apparatus according to claim 41 or 42, wherein the processing module is specifically configured to: when K-1=N=M=H+1, and a value of N is an odd number, determine, based on a preset correspondence between a port index or a cyclic shift and a sub-receiver, that K/2 ports in K ports used for receiving the SRS correspond to the first sub-receiver and other K/2 ports correspond to the second sub-receiver, and determine that H/2 ports in H ports used for receiving the SRS correspond to the first sub-receiver and other H/2 ports correspond to the second sub-receiver.

45. The apparatus according to claim 35, wherein the at least two sub-receivers each have a limited sending capability, a sending capability of a sub-receiver indicates a maximum quantity of antennas capable of being simultaneously used by the sub-receiver to send a signal, the terminal device comprises a first sub-receiver and a second sub-receiver, the first sub-receiver comprises N antennas, the second sub-receiver comprises M antennas, a port quantity of an SRS resource applied to the first sub-receiver is A, and a port quantity of an SRS resource applied to the second sub-receiver is B, wherein N, M, A, and B are positive integers, N=M, A=B, N is S times A, and S is an integer; and
the processing module is specifically configured to: determine, based on a preset correspondence between a port index or a cyclic shift and a sub-receiver, A ports corresponding to the first sub-receiver and B ports corresponding to the second sub-receiver in ports corresponding to an SRS received in each reception.

46. The apparatus according to claim 35, wherein the at least two sub-receivers each have a limited sending capability, a sending capability of a sub-receiver indicates a maximum quantity of antennas capable of being simultaneously used by the sub-receiver to send a signal, the terminal device comprises a first sub-receiver and a second sub-receiver, the first sub-receiver comprises N antennas, the second sub-receiver comprises M antennas, the SRS resource configured for the terminal device comprises a first SRS resource and a second SRS resource, a port quantity of the first SRS resource is 2A, a port quantity of the second SRS resource is 2B, the first sub-receiver and the second sub-receiver each apply A ports of the first SRS resource, and the first sub-receiver and the second sub-receiver each apply B ports of the second SRS resource, wherein N, M, A, and B are positive integers, and N=M=A+B; and
the processing module is specifically configured to: separately determine, based on a preset correspondence between a port index or a cyclic shift and a sub-receiver, A ports corresponding to the first sub-receiver and other A ports corresponding to the second sub-receiver in 2A ports used for receiving an SRS in a 1^{st} reception, and B ports corresponding to the first sub-receiver and other B ports corresponding to the second sub-receiver in 2B ports used for receiving an SRS in a 2^{nd} reception.

47. The apparatus according to claim 35, wherein the at least two sub-receivers each have a limited sending capability, a sending capability of a sub-receiver indicates a maximum quantity of antennas capable of being simultaneously used by the sub-receiver to send a signal, the terminal device comprises a first sub-receiver and a second sub-receiver, the first sub-receiver comprises N antennas, the second sub-receiver comprises M antennas, the port quantity of the SRS resource configured for the terminal device is 2A, and the first sub-receiver and the second sub-receiver each apply A ports of the SRS resource, wherein N, M, and A are positive integers, N is greater than M, N is S times A, M is L times A, and both S and L are integers; and
the processing module is specifically configured to: separately determine, based on a preset correspondence between a port index or a cyclic shift and a sub-receiver, A ports corresponding to the first sub-receiver and other A ports corresponding to the second sub-receiver in 2A ports used for receiving an SRS in each of first L receptions, wherein A ports used for receiving an SRS in each of later S-L receptions correspond to the first sub-receiver.

48. The apparatus according to any one of claims 45 to 47, wherein the antenna comprised in the first sub-receiver and the antenna comprised in the second sub-receiver are separately predetermined based on antenna polarization and/or cabling.

49. The apparatus according to any one of claims 45 to 47, wherein the antenna comprised in the first sub-receiver and the antenna comprised in the second sub-receiver are separately determined by the terminal device based on a channel state information reference signal, or are separately determined by the network device based on the SRS.

50. The apparatus according to claim 35, wherein an antenna set comprised in the sub-receiver corresponds to one codeword.

51. The apparatus according to claim 35, wherein an antenna set comprised in the sub-receiver corresponds to one code division multiplexing group.

52. A communication apparatus, used in a terminal device, wherein the apparatus comprises:
a receiving module, configured to receive a sounding reference signal SRS resource configured by a network device for the terminal device, wherein a port quantity of the SRS resource corresponds to an antenna sending capability of the terminal device, the antenna sending capability indicates a maximum quantity of antennas capable of being simultaneously used by the terminal device to send a signal, and the terminal device comprises at least two sub-receivers; and
a sending module, configured to send SRSs to the network device, wherein the SRSs are sent by the terminal device separately through antennas of different sub-receivers based on the SRS resource configured by the network device for the terminal device and an antenna quantity of each sub-receiver of the terminal device, so that the network device is able to determine, based on the port quantity of the SRS resource configured for the terminal device and the antenna quantity of each sub-receiver of the terminal device, a sub-receiver corresponding to a port corresponding to the SRS.

53. The apparatus according to claim 52, wherein the terminal device comprises a first sub-receiver and a second sub-receiver, the first sub-receiver comprises N antennas, the second sub-receiver comprises M antennas, and the port quantity of the SRS resource configured for the terminal device is K, wherein N, M, and K are positive integers; and
when K is less than M+N, the sending module is specifically configured to: send an SRS to the network device in a transmissions through an antenna of the first sub-receiver, wherein an SRS sent in each transmission corresponds to a different antenna; and send an SRS to the network device in b transmissions through an antenna of the second sub-receiver, wherein an SRS sent in each transmission corresponds to a different antenna, wherein
N is S times K, M is L times K, a=S when S is an integer, or a is a value obtained by rounding up S when S is a non-integer, and b=L when L is an integer, or b is a value obtained by rounding up L when L is a non-integer.

54. The apparatus according to claim 53, wherein when K=M+N, the sending module is specifically configured to send the SRSs to the network device through all antennas of the first sub-receiver and the second sub-receiver, wherein port indexes, combs, or cyclic shifts of channels of the antennas corresponding to the SRSs are different from each other.

55. The apparatus according to claim 53, wherein when K=M+N, the sending module is specifically configured to send the SRSs to the network device through all antennas of the first sub-receiver and the second sub-receiver, wherein K ports of the SRS resource are used for sending on X adjacent orthogonal frequency division multiplexing OFDM symbols, different OFDM symbols are sent through corresponding sub-receivers based on a preset correspondence between an OFDM symbol and a sub-receiver, and different OFDM symbols correspond to different ports.

56. The apparatus according to any one of claims 53 to 55, wherein when M=N=K+1, the sending module is specifically configured to: send an SRS to the network device through K antennas of the first sub-receiver; send an SRS to the network device through an antenna other than the K antennas of the first sub-receiver and a first antenna of the second sub-receiver; and send an SRS to the network device through all the antennas except the first antenna of the second sub-receiver, wherein
port indexes or cyclic shifts of channels of the antennas corresponding to the SRSs are different from each other.

57. The apparatus according to claim 52, wherein the terminal device comprises a first sub-receiver and a second sub-receiver, the first sub-receiver comprises N antennas, the second sub-receiver comprises M antennas, and the port quantity of the SRS resource configured for the terminal device is K, wherein N, M, and K are positive integers, N is S times K, and M is L times K; and
when K is less than M+N, both S and L are integers, and S=L+1, the sending module is specifically configured to send an SRS to the network device in a transmissions separately through an antenna of the first sub-receiver and an antenna of the second sub-receiver, wherein an SRS corresponding to an odd-numbered one among the a transmissions is sent through the antenna of the first sub-receiver, an SRS corresponding to an even-numbered one among the a transmissions is sent through the antenna of the second sub-receiver, an SRS sent in each transmission corresponds to a different antenna, and a=S+L.

58. The apparatus according to claim 52, wherein the terminal device comprises a first sub-receiver and a second sub-receiver, the first sub-receiver comprises N antennas, the second sub-receiver comprises M antennas, the SRS resource configured for the terminal device comprises a first SRS resource and a second SRS resource, a port quantity of the first SRS resource is K, and a port quantity of the second SRS resource is H, wherein N, M, K, and H are positive integers, and values of K and H are different; and
when K=N and H=M, the sending module is specifically configured to: send an SRS to the network device through all the antennas of the first sub-receiver; and send an SRS to the network device through all the antennas of the second sub-receiver.

59. The apparatus according to claim 58, wherein when K+H=N=M, the sending module is specifically configured to: send an SRS to the network device through K antennas of the first sub-receiver; send an SRS to the network device through H antennas other than the K antennas of the first sub-receiver; send an SRS to the network device through K antennas of the second sub-receiver; and send an SRS to the network device through H antennas other than the K antennas of the second sub-receiver.

60. The apparatus according to claim 58 or 59, wherein when K-1=N=M=H+1, the sending module is specifically configured to: send an SRS to the network device through all the antennas of the first sub-receiver and a first antenna of the second sub-receiver; and send an SRS to the network device through all the antennas except the first antenna of the second sub-receiver, wherein
port indexes or cyclic shifts of channels of the antennas corresponding to the SRSs are different from each other.

61. The apparatus according to claim 58 or 59, wherein when K-1=N=M=H+1, and a value of N is an odd number, the sending module is specifically configured to: send an SRS to the network device through K/2 antennas of the first sub-receiver and k/2 antennas of the second sub-receiver; and send an SRS to the network device through other H/2 antennas of the first sub-receiver and other H/2 antennas of the second sub-receiver, wherein
port indexes or cyclic shifts of channels of the antennas corresponding to the SRSs are different from each other.

62. The apparatus according to claim 52, wherein the at least two sub-receivers each have a limited antenna sending capability, the terminal device comprises a first sub-receiver and a second sub-receiver, the first sub-receiver comprises N antennas, the second sub-receiver comprises M antennas, a port quantity of an SRS resource applied to the first sub-receiver is A, and a port quantity of an SRS resource applied to the second sub-receiver is B, wherein N, M, A, and B are positive integers, N=M, A=B, N is S times A, and S is an integer; and
the sending module is specifically configured to send an SRS to the network device in S transmissions separately through A antennas of the first sub-receiver and B antennas of the second sub-receiver, wherein an SRS sent in each transmission corresponds to a different antenna, and port indexes or cyclic shifts of channels of the antennas corresponding to the SRSs are different from each other.

63. The apparatus according to claim 52, wherein the at least two sub-receivers each have a limited antenna sending capability, the terminal device comprises a first sub-receiver and a second sub-receiver, the first sub-receiver comprises N antennas, the second sub-receiver comprises M antennas, the SRS resource configured for the terminal device comprises a first SRS resource and a second SRS resource, a port quantity of the first SRS resource is 2A, a port quantity of the second SRS resource is 2B, the first sub-receiver and the second sub-receiver each apply A ports of the first SRS resource, and the first sub-receiver and the second sub-receiver each apply B ports of the second SRS resource, wherein N, M, A, and B are positive integers, and N=M=A+B; and
the sending module is specifically configured to: send an SRS to the network device through A antennas of the first sub-receiver and A antennas of the second sub-receiver; and send an SRS to the network device through B antennas other than the A antennas of the first sub-receiver and B antennas other than the A antennas of the second sub-receiver, wherein
port indexes or cyclic shifts of channels of the antennas corresponding to the SRSs are different from each other.

64. The apparatus according to claim 52, wherein the at least two sub-receivers each have a limited antenna sending capability, the terminal device comprises a first sub-receiver and a second sub-receiver, the first sub-receiver comprises N antennas, the second sub-receiver comprises M antennas, the port quantity of the SRS resource configured for the terminal device is 2A, and the first sub-receiver and the second sub-receiver each apply A ports of the SRS resource, wherein N, M, and A are positive integers, N is greater than M, N is S times A, M is L times A, and both S and L are integers; and
the sending module is specifically configured to send an SRS to the network device in L transmissions through A antennas of the first sub-receiver and A antennas of the second sub-receiver; and send an SRS to the network device in S-L transmissions through the A antennas of the first sub-receiver, wherein
an SRS sent in each transmission corresponds to a different antenna, and port indexes or cyclic shifts of channels of the antennas corresponding to the SRSs are different from each other.

65. The apparatus according to any one of claims 62 to 64, wherein the antenna comprised in the first sub-receiver and the antenna comprised in the second sub-receiver are separately predetermined based on antenna polarization and/or cabling.

66. The apparatus according to any one of claims 62 to 64, wherein the antenna comprised in the first sub-receiver and the antenna comprised in the second sub-receiver are separately determined by the terminal device based on a channel state information reference signal, or are separately determined by the network device based on the SRS.

67. The apparatus according to claim 52, wherein an antenna set comprised in the sub-receiver corresponds to one codeword.

68. The apparatus according to claim 52, wherein an antenna set comprised in the sub-receiver corresponds to one code division multiplexing group.

69. A computer-readable storage medium, wherein the computer-readable storage medium stores computer instructions, and when the computer instructions are run on a network device or a chip built in the network device, the network device is enabled to perform the method according to any one of claims 1 to 17.

70. A computer-readable storage medium, wherein the computer-readable storage medium stores computer instructions, and when the computer instructions are run on a terminal device or a chip built in the terminal device, the terminal device is enabled to perform the method according to any one of claims 18 to 34.
